(19) Europäisches Patentamt
European Patent Office
Office européen des brevets

(11) **EP 1 870 844 A1**

(12) **EUROPEAN PATENT APPLICATION**
published in accordance with Art. 153(4) EPC

(43) Date of publication:
**26.12.2007 Bulletin 2007/52**

(51) Int Cl.:
**G06Q 10/00** *(2006.01)*     **G06Q 40/00** *(2006.01)*

(21) Application number: **06728729.2**

(22) Date of filing: **07.03.2006**

(86) International application number:
**PCT/JP2006/304410**

(87) International publication number:
**WO 2006/095746 (14.09.2006 Gazette 2006/37)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2005 JP 2005063169**
**07.04.2005 JP 2005110425**

(71) Applicants:
• **Intellectual Property Bank Corp.**
**Tokyo 105-0001 (JP)**
• **Masuyama, Hiroaki**
**Toyonaka-shi,**
**Osaka 560-0054 (JP)**

(72) Inventors:
• **MIYAMOTO, Kaoru**
**102, Villa White Nagasaki, 6-29-3 Nagasaki**
**Tokyo 1710051 (JP)**
• **ORITO, Manabu**
**c/o Intellectual Property Bank Corp.**
**Tokyo, 1050001 (JP)**

• **ZHANG, Yu**
**c/o Intellectual Property Bank Corp.**
**Tokyo, 1050001 (JP)**
• **ASADA, Makoto**
**c/o Intellectual Property Bank Corp.**
**Tokyo, 1050001 (JP)**
• **HASUKO, Kazumi**
**c/o Intellectual Property Bank Corp.**
**Tokyo, 1050001 (JP)**
• **HOTTA, Hideaki**
**c/o Intellectual Property Bank Corp.**
**Tokyo, 1050001 (JP)**
• **MASUYAMA, Hiroaki**
**501, 9-30, Sakuranomachi**
**Osaka, 5600054 (JP)**

(74) Representative: **Style, Kelda Camilla Karen et al**
**Page White & Farrer**
**Bedford House**
**John Street**
**London, WC1N 2BF (GB)**

(54) **COMPANY EVALUATION ASSISTING DEVICE**

(57)    Input of cause-and-effect model information where the coefficients at which three evaluated values, i.e., the evaluated values of business strategy, research-and-development strategy , and intellectual property strategy influence the company evaluated value, the co-efficients at which the three evaluated values and the company evaluated value influence the observable in-dexes respectively, the error variables with which the fac-tors other than the three evaluated values and the com-pany evaluated value give variations to the company evaluated value and the observable indexes respectively are assumed is received. From the inputted the cause-and-effect model information and the observable index-es, the estimates of the coefficients are calculated by covariance structure analysis. From the coefficients and the observable indexes, the three evaluated values and the company evaluated value are calculated. With this, the relationship among the three strategies which are directly nonobservable abstract factors, i.e., the business strategy, the research-and-development strategy, and intellectual property strategy and the company value is verified, and company evaluation based on these three strategies can be performed.

FIG. 4

**Description**

BACKGROUND OF THE INVENTION

1. Field of the Invention

The present invention relates to an enterprise evaluation supporting device, and in particular to a company evaluation assisting device, assisting method and assisting program capable of calculating the evaluated value of companies based on quantitative analysis of company strategy.

2. Description of the Related Art

Amendment of the Trust Business Law enabling the trust of intellectual property rights was passed in 2004, and the environment for utilizing intellectual property as the source of profits is steadily becoming organized. Further, in light of the "Intellectual Property Information Disclosure Guidelines" announced by the Ministry of Economy, Trade and Industry in 2004, certain companies are disclosing their intellectual property in IP reports and the like, and the disclosure of information concerning the intellectual property of respective companies is making progress.

Nevertheless, at the present stage, opportunities for general investors to access intellectual property related data such as the number of patent applications of each company are still scarce. Moreover, even assuming that an investor is able to view intellectual property related data, there is still a problem in that such investor will not be able to clearly understand how such data contributes to the company earnings.

The foregoing "Intellectual Property Information Disclosure Guidelines" are based on the recognition of the importance of companies disclosing the three strategies of business strategy, R&D strategy and intellectual property strategy as a triune activity to the market, and such activity being rightfully evaluated. Nevertheless, these three strategies have never been quantified, nor has it ever been demonstrated that these three strategies are associated with the company value. Thus, even if the three strategies are disclosed as a triune activity to the market, it is difficult for general investors to evaluate such strategies.

Japanese Patent Laid-Open Publication No. 2004-348170 describes performing principle component analysis based on a variance-covariance matrix of factors obtained from an annual security report, calculating the weighting of the respective factors, and determining the numerical value computed by multiplying the weighting to each factor for each company as the intellectual potential. Nevertheless, under the current status where the relationship of the three strategies of business strategy, R&D strategy and intellectual property strategy, which are abstract factors that cannot be directly observed, and the company value has not been demonstrated, principle component analysis cannot be used for evaluating the company value based on the three strategies.

SUMMARY OF THE INVENTION

The first object of the present invention is to provide a company evaluation assisting device capable of demonstrating the relationship of the three strategies of business strategy, R&D strategy and intellectual property strategy, and the company value, which are abstract factors that cannot be directly observed, and enabling the company evaluation based on these three strategies.
The second object of the present invention is to provide a company evaluation assisting device capable of quantitatively calculating the evaluated value of the three strategies of business strategy, R&D strategy and intellectual property strategy, and the company evaluated value, which are abstract factors that cannot be directly observed, based on the observation data.

An addition object of the present invention is to provide an assisting method and assisting program to be executed by a computer.

(1) In order to achieve the foregoing first object, the company evaluation assisting device of the present invention comprises:

input means for receiving input of causal model information hypothesizing, a coefficient in which each of three evaluated values of business strategy, R&D strategy and intellectual property strategy influences a company evaluated value, a coefficient in which each of the three evaluated values and the company evaluated value influences each of a plurality of observable indexes, and
an error variable in which each of factors other than the three evaluated values and the company evaluated value give fluctuation to each of the company evaluated value and the plurality of observable indexes;

coefficient estimation means for calculating an estimated value of each of the coefficients by covariance structure analysis based on the causal model information input from the input means, and the plurality of observable indexes;

adaptation verification means for verifying adaptation of the causal model by calculating an adaptation index based on each of the coefficients estimated with the coefficient estimation means; and

evaluated value calculation means for calculating at least one among the three evaluated values and the company evaluated value based on each of the coefficients and the plurality of observable indexes upon passing the verification by the adaptation verification means.

Thereby, it is possible to demonstrate the relationship where the three strategies of business strategy, R&D strategy and intellectual property strategy, which are abstract factors that cannot be directly observed, are inflicting a causal influence on the company value as an abstract factor that cannot be directly observed. It is also possible to demonstrate the relationship where the foregoing three strategies and the company value are inflicting a causal influence on an observable index. In addition, since company evaluation based on the three strategies is enabled, it is possible to perform company evaluation that is proven and highly reliable. Further, it is possible to obtain a causal model with high adaptation and significance by setting each of the three strategies of business strategy, R&D strategy and intellectual property strategy as causal model information that influences the company evaluated value.

(2) With this company evaluation assisting device, it is desirable to further comprise index selection means for selecting a plurality of observable indexes to be included in the causal model information,

wherein the index calculation means calculate correlation coefficients of the plurality of observable indexes that are candidates for selection, and select a combination of indexes in which the correlation coefficients are smallest.

Thereby, it is possible to statistically extract independent indexes, and reflect the various aspects of company activity on the analysis with fewer indexes.

(3) With this company evaluation assisting device, it is desirable

that the causal model information is information that hypothesizes an index showing at least "(facility investment efficiency) or (labor productivity)" = (value added amount) / [(tangible fixed assets) or (number of employees)]

as the observable index that is influenced by an evaluated value of the business strategy, and

that the value added amount = (operating profit) + (R&D cost) + (depreciation cost) + (personnel expense) + (board members' remuneration) + (welfare expense) + (tax and dues).

Thereby, it is possible to obtain a causal model with higher adaptation and significance.

It is more desirable that the causal model information further hypothesizes an index of "profit to sales ratio" = [(operating profit) or (gross operating profit)] / (sales volume),

"value added to sales ratio"

= (value added amount) / (sales volume), or "ROA"

= [(value added amount, gross operating profit, or operating profit) + (patent royalty income)] / (total assets)

as the observable index that is influenced by an evaluated value of the business strategy,

that the gross operating profit = (operating profit) + (R&D cost), and

that the value added amount = (operating profit) + (R&D cost) + (depreciation cost) + (personnel expense) + (board members' remuneration) + (welfare expense) + (tax and dues).

(4) With this company evaluation assisting device, it is desirable

that the causal model information is information that hypothesizes an index showing at least "R&D cost ratio" = (R&D cost) / [(sales volume), (value added amount), (total assets) or (gross operating profit)]

as the observable index that is influenced by an evaluated value of the R&D strategy,

that the value added amount = (operating profit) + (R&D cost) + (depreciation cost) + (personnel expense) + (board members' remuneration) + (welfare expense) + (tax and dues), and

that the gross operating profit = (operating profit) + (R&D cost).

Thereby, it is possible to obtain a causal model with higher adaptation and significance.

It is more desirable that the causal model information further hypothesizes an index of "R&D cost per inventor" = (R&D cost) / (number of inventors)

as the observable index that is influenced by an evaluated value of the R&D strategy.

(5) With this company evaluation assisting device, it is desirable

that the causal model information is information that hypothesizes an index showing at least

"(number of claims filed per inventor), (number of applications per inventor) or (number of patent registrations per inventor)"

= [(number of claims filed), (number of applications) or (number of patent registrations)] / (number of inventors) as the observable index that is influenced by an evaluated value of the intellectual property strategy.

Thereby, it is possible to obtain a causal model with higher adaptation and significance.

It is more desirable that the causal model information further hypothesizes an index of

"(number of claims per patent application) or (number of claims per patent registration)"

= [(number of claims filed) / (number of patent applications)] or [(number of claims granted) / (number of patent registrations)]

as the observable index that is influenced by an evaluated value of the intellectual property strategy.

Furthermore,

"patent application productivity"

= (number of claims filed) / (R&D cost)

may also be hypothesized.

(6) With this company evaluation assisting device, it is desirable

that the causal model information is information that hypothesizes an index showing at least "PBR" = (aggregate market value) / (equity capital) as the observable index that is influenced by the company evaluated value.

Thereby, it is possible to obtain a causal model with higher adaptation and significance.

It is more desirable that the causal model information further hypothesizes an index of

"total factor productivity"

= (current term value added amount)/(previous term value added amount) - [(1 - Labor Distribution Share) $\times$ (current term depreciation target tangible fixed assets)/(previous term depreciation target tangible fixed assets)] - [(Labor Distribution Share) $\times$ (current term number of employees)/(previous term number of employees)] as the observable index that is influenced by the company evaluated value.

Furthermore, "MVA"

= (total number of outstanding shares) $\times$ (stock price) - (shareholder's equity)

may also be hypothesized.

(7) With this company evaluation assisting device, the evaluated value calculation means may also calculate at least the evaluated value of the intellectual property strategy and the company evaluated value, and calculate the difference between the evaluated value of the intellectual property strategy and the company evaluated value.

As a result of seeking a value obtained by subtracting the company evaluated value from the intellectual property strategy evaluated value, it is possible to quantify the potential of so-called undervalued companies which are steadily executing their intellectual property strategy but have yet to appear in the market valuation related index. Contrarily, it could be said that companies having a low value are companies that are overvalued in the current market. Thereby, this value can be used to predict which company will succeed in the future and make investment decisions.

(8) With this company evaluation assisting device, the evaluated value calculation means may also calculate at least the evaluated value of the R&D strategy, the evaluated value of the intellectual property strategy and the company evaluated value, and calculate the sum of the evaluated value of the R&D strategy and the evaluated value of the intellectual property strategy.

Companies in which the sum of the R&D strategy evaluated value and the intellectual property strategy evaluated value is large can be evaluated as companies that are steadily executing their R&D strategy and intellectual property strategy. It is also possible to give consideration to the company evaluated value. In other words, it could be said that companies in which the sum of the R&D strategy evaluated value and the intellectual property strategy evaluated value is large and the company evaluated value is small are so-called undervalued companies which are steadily executing their R&D strategy and intellectual property strategy but have yet to appear in the market valuation related index. Contrarily, it could be said that companies in which the sum of the R&D strategy evaluated value and the intellectual property strategy evaluated value is small and the company evaluated value is large are overvalued companies in the current market. Thereby, this value can be used to predict which company will succeed in the future and make investment decisions.

(9) The company evaluation assisting method of the present invention is realized by executing the processing with each means of the foregoing company evaluation assisting device.

(10) Further, the company evaluation assisting program of the present invention is for causing the computer to execute the respective steps of the foregoing company evaluation assisting method.

(11) In order to achieve the foregoing second object, the company evaluation assisting device of the present invention comprises:

storage means for storing respectively, for a plurality of companies,

"(facility investment efficiency) or (labor productivity)"

= (value added amount) / [(tangible fixed assets) or (number of employees)], "PBR"

= (aggregate market value) / (equity capital) and other indexes;

standardization means for calculating a standardized value of each of the "(facility investment efficiency) or (labor productivity)" and the "PBR" of company to be evaluated among the plurality of companies based on average and variance of all companies for which the respective indexes are stored in the storage means; and

evaluated value calculation means for calculating a business strategy evaluated value by performing weighting of 0.06 or more and 0.70 or less, and 0.03 or more and 0.05 or less respectively to the "(facility investment efficiency) or (labor productivity)" and the "PBR" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues).

Thereby, it is possible to quantitatively calculate the evaluated value of the business strategy, which is abstract factor that cannot be directly observed, based on the observation data.

It is also possible to store in the storage means as said other indexes,

"profit to sales ratio"

= [(operating profit) or (gross operating profit)] / (sales volume),

"value added to sales ratio" = (value added amount) / (sales volume), or "ROA" = [(value added amount, gross operating profit, or operating profit) + (patent royalty income)] / (total assets); and

to standardize the index by the standardization means and calculate a business strategy evaluated value by performing weighting of 0.12 or more and 0.65 or less by the evaluated value calculation means,

wherein the gross operating profit = (operating profit) + (R&D cost), and

wherein the value added amount = (operating profit) + (R&D cost) + (depreciation cost) + (personnel expense) + (board members' remuneration) + (welfare expense) + (tax and dues).

(12) Another company evaluation assisting device according to the present invention comprises:

storage means for storing respectively, for a plurality of companies,

"(facility investment efficiency) or (labor productivity)"

= (value added amount) / [(tangible fixed assets) or (number of employees)],

"PBR"

= (aggregate market value) / (equity capital) and other indexes;

standardization means for calculating a standardized value of each of the "(facility investment efficiency) or (labor productivity)" and the "PBR" of company to be evaluated among the plurality of companies based on average and variance of all companies for which the respective indexes are stored in the storage means; and

evaluated value calculation means for calculating a business strategy evaluated value by performing weighting of 0.06 or more and 0.70 or less, and 0.02 or more and 0.05 or less respectively to the "(facility investment efficiency) or (labor productivity)" and the "PBR" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues) .

Thereby, it is possible to quantitatively calculate the evaluated value of the business strategy, which is abstract factor that cannot be directly observed, based on the observation data.

It is also possible to store in the storage means as said other indexes,

"profit to sales ratio"

= [(operating profit) or (gross operating profit)] / (sales volume),

"value added to sales ratio" = (value added amount) / (sales volume), or "ROA" = [(value added amount, gross operating profit, or operating profit) + (patent royalty income)] / (total assets); and

to standardize the index by the standardization means and calculate a business strategy evaluated value by performing weighting of 0.12 or more and 0.65 or less by the evaluated value calculation means,

wherein the gross operating profit = (operating profit) + (R&D cost), and

wherein the value added amount = (operating profit) + (R&D cost) + (depreciation cost) + (personnel expense) + (board members' remuneration) + (welfare expense) + (tax and dues).

(13) Another company evaluation assisting device according to the present invention comprises:

storage means for storing respectively, for a plurality of companies,

"R&D cost ratio"

= (R&D cost) / [(sales volume), (value added amount), (total assets) or (gross operating profit)],

"R&D cost per inventor"

= (R&D cost) / (number of inventors),

"(number of claims filed per inventor), (number of applications per inventor) or (number of patent registrations per inventor)"

= [(number of claims filed), (number of applications) or (number of patent registrations)] / (number of inventors) and other indexes;

standardization means for calculating a standardized value of each of the "R&D cost ratio", the "R&D cost per inventor" and the "(number of claims filed per inventor), (number of applications per inventor) or (number of patent registrations per inventor)" of company to be evaluated among the plurality of companies based on average and variance of all companies for which the respective indexes are stored in the storage means; and

evaluated value calculation means for calculating an R&D strategy evaluated value by performing weighting of 0.20 or more and 0.35 or less, 0.15 or more and 0.25 or less, and 0.06 or more and 0.15 or less respectively to the "R&D cost ratio", the "R&D cost per inventor" and the "(number of claims filed per inventor), (number of applications per inventor) or (number of patent registrations per inventor)" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and
wherein the gross operating profit = (operating profit) +
(R&D cost).

Thereby, it is possible to quantitatively calculate the evaluated value of the R&D strategy, which is abstract factor that cannot be directly observed, based on the observation data.

It is also possible to store in the storage means as said other indexes,
"patent application productivity"
= (number of claims filed) / (R&D cost), or "examination request productivity" = (patent application productivity) / (estimated examination request ratio); and
to standardize the index by the standardization means and calculate a R&D strategy evaluated value by performing weighting of -0.30 or more and -0.20 or less by the evaluated value calculation means,
wherein the estimated examination request ratio = (examination request ratio for applications in which examination request period is expired).

(14) Another company evaluation assisting device according to the present invention comprises:

storage means for storing respectively, for a plurality of companies,
"R&D cost ratio"
= (R&D cost) / [(sales volume), (value added amount), (total assets) or (gross operating profit)],
"R&D cost per inventor" = (R&D cost) / (number of inventors) and other indexes;
standardization means for calculating a standardized value of each of the "R&D cost ratio" and the "R&D cost per inventor" of company to be evaluated among the plurality of companies based on average and variance of all companies for which the respective indexes are stored in the storage means; and
evaluated value calculation means for calculating an R&D strategy evaluated value by performing weighting of 0.20 or more and 0.70 or less, and 0.15 or more and 0.30 or less respectively to the "R&D cost ratio" and the "R&D cost per inventor" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and
wherein the gross operating profit = (operating profit) +
(R&D cost).
Thereby, it is possible to quantitatively calculate the evaluated value of the R&D strategy, which is abstract factor that cannot be directly observed, based on the observation data.

It is also possible to store in the storage means as said other indexes,
"patent application productivity"
= (number of claims filed) / (R&D cost), or "examination request productivity" = (patent application productivity) / (estimated examination request ratio); and
to standardize the index by the standardization means and calculate a R&D strategy evaluated value by performing weighting of -0.60 or more and -0.08 or less by the evaluated value calculation means,
wherein the estimated examination request ratio = (examination request ratio for applications in which examination request period is expired).

It is also possible to store in the storage means as said other indexes,
"(number of claims filed per inventor), (number of applications per inventor) or (number of patent registrations per inventor)"
= [(number of claims filed), (number of applications) or (number of patent registrations)] / (number of inventors); and
to standardize the index by the standardization means and calculate a R&D strategy evaluated value by performing weighting of 0.03 or more and 0.15 or less by the evaluated value calculation means.

(15) Another company evaluation assisting device according to the present invention comprises:

storage means for storing indexes, for each of a plurality of companies,
"(number of claims filed per inventor), (number of applications per inventor) or (number of patent registrations per inventor)"
= [(number of claims filed), (number of applications) or (number of patent registrations)] / (number of inventors),
"(number of claims per patent application) or (number of claims per patent registration)"
= [(number of claims filed) / (number of patent applications)] or [(number of claims granted) / (number of patent registrations)],
"patent application productivity"
= (number of claims filed) / (R&D cost) and other indexes;
standardization means for calculating a standardized value of each of the "(number of claims filed per inventor), (number of applications per inventor) or (number of patent registrations per inventor)", the "(number of claims per patent application) or (number of claims per patent registration)" and the "patent application productivity" of a company to be evaluated among the plurality of companies based on average and variance of all companies for which the respective indexes are stored in the storage means; and
evaluated value calculation means for calculating an intellectual property strategy evaluated value by performing weighting of 0.75 or more and 0.90 or less, 0.06 or more and 0.15 or less, and 0.03 or more and 0.07 or less respectively to the "(number of claims filed per inventor), (number of applications per inventor) or (number of patent registrations per inventor)", the "(number of claims per patent application) or (number of claims per patent registration)" and the "patent application productivity" of the company to be evaluated standardized with the standardization means, and weighting the remainder to the other indexes.

Thereby, it is possible to quantitatively calculate the evaluated value of the intellectual property strategy, which is abstract factor that cannot be directly observed, based on the observation data.

(16) Another company evaluation assisting device according to the present invention comprises:

storage means for storing indexes, for each of a plurality of companies,
"(number of claims per patent application) or (number of claims per patent registration)"
= [(number of claims filed) / (number of patent applications)] or [(number of claims granted) / (number of patent registrations)],
"patent application productivity"
= (number of claims filed) / (R&D cost) and other indexes;
standardization means for calculating a standardized value of each of the "(number of claims per patent application) or (number of claims per patent registration)" and the "patent application productivity" of a company to be evaluated among the plurality of companies based on average and variance of all companies for which the respective indexes are stored in the storage means; and
evaluated value calculation means for calculating an intellectual property strategy evaluated value by performing weighting of 0.06 or more and 0.40 or less, and 0.02 or more and 0.40 or less respectively to the "(number of claims per patent application) or (number of claims per patent registration)" and the "patent application productivity" of the company to be evaluated standardized with the standardization means, and weighting the remainder to the other indexes.

Thereby, it is possible to quantitatively calculate the evaluated value of the intellectual property strategy, which is abstract factor that cannot be directly observed, based on the observation data.

It is also possible to store in the storage means as said other indexes,
"(number of claims filed per inventor), (number of applications per inventor) or (number of patent registrations per inventor)"
= [(number of claims filed), (number of applications) or (number of patent registrations)] / (number of inventors); and
to standardize the index by the standardization means and calculate an intellectual property strategy evaluated value by performing weighting of 0.75 or more and 0.90 or less by the evaluated value calculation means.

(17) Another company evaluation assisting device according to the present invention comprises:

storage means for storing indexes, for each of a plurality of companies, "PBR"
= (aggregate market value) / (equity capital),
"(number of claims filed per inventor), (number of applications per inventor) or (number of patent registrations per inventor)"
= [(number of claims filed), (number of applications) or (number of patent registrations)] / (number of inventors), "total factor productivity"

= (current term value added amount)/(previous term value added amount) - [(1 - Labor Distribution Share) × (current term depreciation target tangible fixed assets)/(previous term depreciation target tangible fixed assets)] - [(Labor Distribution Share) × (current term number of employees)/(previous term number of employees)], and other indexes; standardization means for calculating a standardized value of each of the "PBR", the "(number of claims filed per inventor), (number of applications per inventor) or (number of patent registrations per inventor)" and the "total factor productivity" of a company to be evaluated among the plurality of companies based on average and variance of all companies for which the respective indexes are stored in the storage means; and evaluated value calculation means for calculating a company evaluated value by performing weighting of 0.25 or more and 0.60 or less, 0.10 or more and 0.15 or less, and 0.04 or more and 0.10 or less respectively to the "PBR", the "(number of claims filed per inventor), (number of applications per inventor) or (number of patent registrations per inventor)" and the "total factor productivity" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and

wherein the labor distribution share = [(personnel expense to be included in selling cost and administrative expenses) + (labor cost to be included in manufacturing cost)] / (value added amount).

Thereby, it is possible to quantitatively calculate the company evaluated value, which is abstract factor that cannot be directly observed, based on the observation data.

It is also possible to store in the storage means as said other indexes, "MVA" = (total number of outstanding shares) × (stock price) - (shareholder's equity); and

to standardize the index by the standardization means and calculate a company evaluated value by performing weighting of 0.30 or more and 0.35 or less by the evaluated value calculation means.

(18) Another company evaluation assisting device according to the present invention comprises:

storage means for storing indexes, for each of a plurality of companies, "PBR"

= (aggregate market value) / (equity capital),

"total factor productivity"

= (current term value added amount)/(previous term value added amount) - [(1 - Labor Distribution Share) × (current term depreciation target tangible fixed assets)/(previous term depreciation target tangible fixed assets)] - [(Labor Distribution Share) × (current term number of employees)/(previous term number of employees)], and other indexes; standardization means for calculating a standardized value of each of the "PBR" and the "total factor productivity" of a company to be evaluated among the plurality of companies based on average and variance of all companies for which the respective indexes are stored in the storage means; and evaluated value calculation means for calculating a company evaluated value by performing weighting of 0.20 or more and 0.60 or less, and 0.04 or more and 0.15 or less respectively to the "PBR" and the "total factor productivity" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and

wherein the labor distribution share = [(personnel expense to be included in selling cost and administrative expenses) + (labor cost to be included in manufacturing cost)] / (value added amount).

Thereby, it is possible to quantitatively calculate the company evaluated value, which is abstract factor that cannot be directly observed, based on the observation data.

It is also possible to store in the storage means as said other indexes, "MVA" = (total number of outstanding shares) × (stock price) - (shareholder's equity); and

to standardize the index by the standardization means and calculate a company evaluated value by performing weighting of 0.20 or more and 0.40 or less by the evaluated value calculation means.

It is also possible to store in the storage means as said other indexes,

"(number of claims filed per inventor), (number of

applications per inventor) or (number of patent registrations per inventor)"

= [(number of claims filed), (number of applications) or (number of patent registrations)] / (number of inventors); and

to standardize the index by the standardization means and calculate a company evaluated value by performing weighting of 0.07 or more and 0.15 or less by the evaluated value calculation means.

According to the present invention, firstly it is possible to provide a company evaluation assisting device capable of demonstrating the relationship of the three strategies of business strategy, R&D strategy and intellectual property strategy, and the company value, which are abstract factors that cannot be directly observed, and enabling the company evaluation based on these three strategies.

Secondly, it is possible to provide a company evaluation assisting device capable of quantitatively calculating the evaluated value of the three strategies of business strategy, R&D strategy and intellectual property strategy, and the company evaluated value, which are abstract factors that cannot be directly observed, based on the observation data.

BRIEF DESCRIPTION OF THE DRAWINGS

FIG. 1 is a block diagram showing a structural example of a company evaluation assisting device according to an embodiment of the present invention;

FIG. 2 is an example of a path diagram explaining the schematic concept regarding covariance structure analysis to be performed by the company evaluation assisting device;

FIG. 3 is a flowchart explaining the processing flow in the company evaluation assisting device;

FIG. 4 is a first example of a path diagram applied to the company evaluation assisting device;

FIG. 5 is a second example of a path diagram applied to the company evaluation assisting device;

FIG. 6 is a third example of a path diagram applied to the company evaluation assisting device;

FIG. 7 is a fourth example of a path diagram applied to the company evaluation assisting device; and

FIG. 8 is a fifth example of a path diagram applied to the company evaluation assisting device.

DESCRIPTION OF REFERENCE MARKS

30 company evaluation assisting device

301 CPU (standardization means, coefficient estimation means, adaptation verification means, evaluated value calculation means)

305 recording medium (storage means)

315 HDD (storage means)

310 input means

312 display means

31 printer

DETAILED DESCRIPTION OF THE PREFERRED EMBODIMENTS

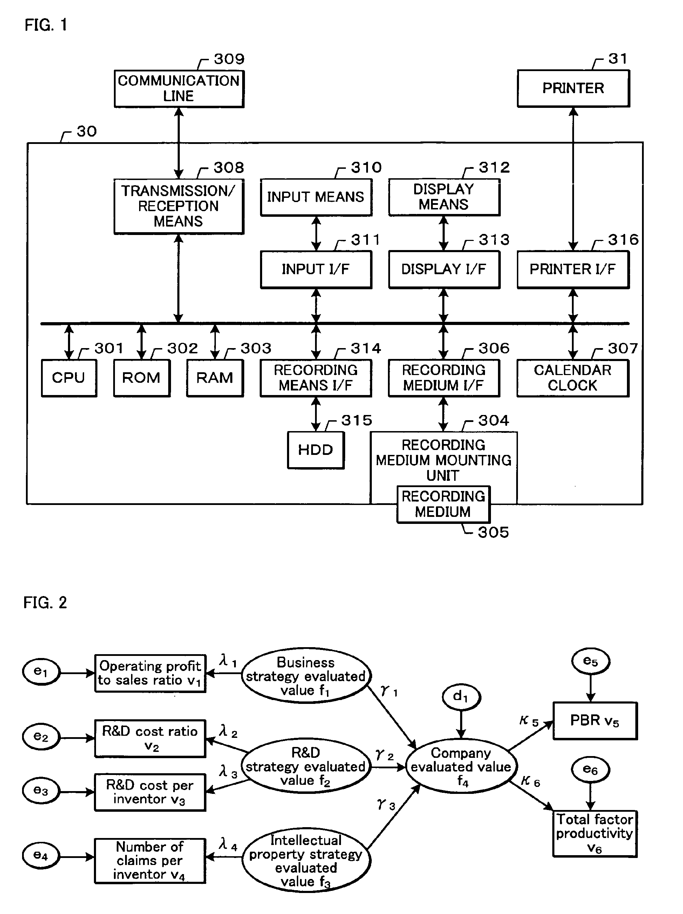

<1. Configuration of Device (FIG. 1)>

FIG. 1 is a block diagram showing a structural example of a company evaluation assisting device according to an embodiment of the present invention. This company evaluation assisting device 30 is a computer device comprising a CPU 301, a ROM 302, a RAM 303, a recording medium mounting unit 304, a recording medium 305, a recording medium interface 306, a calendar clock 307, a transmission/reception means 308, a communication line 309, an input means 310, an input interface 311, a display means 312, a display interface 313, a recording means interface 314, a recording means 315 such as a hard disk drive (HDD), a printer interface 316, and a bus 317.

The CPU 301 controls the overall operation of the company evaluation assisting device 30 while using the RAM 303 as the work area according to program information for assisting company evaluation.

Incidentally, the CPU 301 may execute all processing, or a plurality of dedicated processing devices may be provided so as to make the respective processing devices share and execute such processing.

The recording medium 305 is detachably mounted to the recording medium mounting unit 304. Further, the recording medium mounting unit 304 is connected to the bus 317 via the recording medium interface 306 which records and reads various types of information in and from the recording medium 305. Incidentally, the recording medium 305 is a detachable recording medium of a magnetic recording system or optical recording system as represented by semiconductors such as a memory card, MO or magnetic disk. The recording medium 305 is capable of housing the internal database. Incidentally, the recording medium 305 is also capable of storing external data incorporated from an external database server not shown via the communication line 309.

The calendar clock 307 is used as a clock means for keeping time, and is connected to the bus 317.

The transmission/reception means 308 is connected to the external database server not shown with the communication line 309, and it communicates with the external database server, and acquires various indexes for company evaluation from the external database of the external database server. The acquired data is stored in the HDD 315 or recording medium 305 as an internal database.

The input means 310 is constituted from the likes of a keyboard, mouse, tablet or touch panel, and is connected to the bus 317 via the input interface 311.

The display means 312, for instance, is constituted from the likes of an LCD (Liquid Crystal Display), and is connected to the bus 317 via the display interface 313. This display means 312 displays the data input from the input means 310 and options of operational instructions on the screen. Further, the display means 312 displays the results of the various calculated evaluated values and incidental ranking on the screen.

The HDD (hard disk) 315 is a recording means storing various types of information such as the various constants relating to the processing of the company evaluation assisting device 30 and attribute information upon communicating with a communication device on a network; connection information such as URL (Uniform Resource Locators), gateway information and DNS (Domain Name System); management/finance information regarding the management of companies; various programs for assisting company evaluation; various indexes for company evaluation, functions for estimating the population parameter, and various types of information such as the threshold value for determining the model adaptation and significance of population parameters.

Further, the information stored in the HDD 315 can be read out via the recording means interface 314, and information can also be written in the HDD 315.

The printer 31 is connected to the bus 317 via the printer interface 316. This printer 31, as a printing means, prints information such as the various evaluated values calculated with the company evaluation assisting device 30 and its incidental ranking on a paper medium or the like.

<2. Application of Covariance Structure Analysis (FIG. 2) >

The company evaluation assisting device according to an embodiment of the present invention uses a statistical method known as covariance structure analysis. Thereby, it is possible to demonstrate the relationship of the three strategies of business strategy, R&D strategy and intellectual property strategy, and the company value, and perform company evaluation based on these three strategies.

<2-1. Setting of Variables>

Even though the relationship of the three strategies of business strategy, R&D strategy and intellectual property strategy, and the company value will be demonstrated, these are all abstract concepts that cannot be directly observed. Thus, in covariance structure analysis, these are represented as "latent variable" vector f to enable quantitative analysis. The vector element of the latent variable vector f is a latent variable describing the individual factors. The following values are used as the latent variable in the present embodiment.

$f_1$: business strategy evaluated value

$f_2$: R&D strategy evaluated value

$f_3$: intellectual property strategy evaluated value

$f_4$: company evaluated value

Meanwhile, "PBR," "number of claims per inventor," "total factor productivity" and so on are represented as an "observed variable" vector v by using observable indexes based on annual security reports and provided by each company, and information from the Intellectual Property Digital Library provided by the National Center for Industrial Property Information and Training.

Various indexes can be considered for use as observed variables, and examples thereof are shown as the 79 indexes of [Table 1] to [Table 6] described later. Which index to use will be decided by the user as a result of extracting a plurality of kinds of index combinations and analyzing the respective combinations, and selecting the combination with the highest adaptation. In addition, the user may also calculate the correlation coefficients between the indexes in advance, and select the indexes with small correlation coefficients. By selecting the indexes with small correlation coefficients, it is possible to statistically extract independent indexes, and reflect the various aspects of company activity on the analysis with fewer indexes. The correlation coefficients between the indexes calculated with the company evaluation assisting device 30, or the indexes selected with the company evaluation assisting device 30 based on the correlation coefficient are output to the display means 312 or the like to facilitate the input of causal model information by the user.

<2-2. Setting of Causal Model>

Relationship of the latent variables and the observed variables is unclear, and the relationship between the latent variables is also unclear. Nevertheless, it is possible to create a preliminary hypothesis.

As shown in FIG. 2, the diagram showing the causal association between the variables is referred to a "path diagram."

The path diagram of FIG. 2 is hypothesizing the causal association between the variables as follows.

Foremost, attention is focused on the unidirectional arrow drawn from the latent variable $f_1$ (business strategy evaluated value) toward the left side of the drawing. Here, it is hypothesized that the company's business strategy represented with the latent variable $f_1$ is contributing to the observed variable $v_1$ (operating profit to sales ratio). This influence is represented as the coefficient $\lambda_1$. Nevertheless, the observed variable $v_1$ (operating profit to sales ratio) is decided also be depending on a unique cause that cannot be explained only with the cause of the latent variable $f_1$ (business strategy evaluated value). The fluctuation due to the unique cause can be indicated as the error variable $e_1$. Thus, a unidirectional arrow is also drawn from the error variable $e_1$ to the observed variable $v_1$ (operating profit to sales ratio).

Similarly, with the unidirectional arrow drawn from the latent variable $f_2$ (R&D strategy evaluated value) toward the left side of the drawing, it is hypothesized that the company's R&D strategy is contributing to the observed variable $v_2$ (R&D cost ratio) and the observed variable $v_3$ (R&D cost per inventor). The influences are respectively represented as the coefficients $\lambda_2$ and $\lambda_3$. The fluctuations due to the unique cause that cannot be explained only with the cause of the latent variable $f_2$ (R&D strategy evaluated value) are respectively indicated as the error variables $e_2$ and $e_3$.

Similarly, with the unidirectional arrow drawn from the latent variable $f_3$ (intellectual property strategy evaluated value) toward the left side of the drawing, it is hypothesized that the company's R&D strategy is contributing to the observed variable $v_4$ (number of claims per inventor). This influence is represented as the coefficient $\lambda_4$. The fluctuation due to the unique cause that cannot be explained only with the cause of the latent variable $f_3$ (intellectual property strategy evaluated value) is indicated as the error variable $e_4$.

Similarly, with the unidirectional arrow drawn from the latent variable $f_4$ (company evaluated value) toward the left side of the drawing, it is hypothesized that the company's company value is contributing to the observed variable $v_5$ (PBR) and the observed variable $v_6$ (total factor productivity). These influences are respectively represented as the coefficients $\kappa_5$ and $\kappa_6$. The fluctuations due to the unique cause that cannot be explained only with the cause of the latent variable $f_4$ (company evaluated value) are respectively indicated as the error variables $e_5$ and $e_6$.

With the relationship of the latent variables, it is hypothesized that the latent variables $f_1$ to $f_3$ are contributing to the latent variable $f_4$ (company evaluated value). These influences are respectively represented as the coefficients $\gamma_1$ to $\gamma_3$. Nevertheless, the latent variable $f_4$ (company evaluated value) is decided also by depending on the unique cause that cannot be explained only with the cause of the latent variables $f_1$ to $f_3$. The fluctuation due to the unique cause is indicated as the error variable $d_1$.

<2-3. Conclusion of Equation>

As a result of creating a causal model hypothesized regarding the causal association of the latent variables and the observed variables, and the causal association of the latent variables, these relationships can be represented with a primary simultaneous equation. In other words, the individual observed variables $v_1$ to $v_6$ can be represented as:
Observed variable = coefficient $\times$ latent variable to become cause + error variable,
and the relationship of the latent variables can be represented as:
Latent variable to be influenced = coefficient $\times$ latent variable to become cause + error variable.
Nevertheless, when it is hypothesized that more latent variables are to become the cause, the sum of "coefficient $\times$ latent variables to become cause" is sought for the amount of such latent variables.

The example of FIG. 2 can be represented as follows:

$$v_{1i} = \lambda_1 \times f_{1i} + e_1$$

$$v_{2i} = \lambda_2 \times f_{2i} + e_2$$

$$v_{3i} = \lambda_3 \times f_{2i} + e_3$$

$$v_{4i} = \lambda_4 \times f_{3i} + e_4$$

$$v_{5i} = \kappa_5 \times f_{4i} + e_5$$

$$v_{6i} = \kappa_6 \times f_{4i} + e_6$$

$$f_{4i} = \gamma_1 \times f_{1i} + \gamma_2 \times f_{2i} + \gamma_3 \times f_{3i} + d_1 \ldots\ldots\ldots\ldots\ldots \text{(Formula 1)}$$

Here, the suffix i is provided for differentiation since the observed variable vector v and the latent variable vector f are different values for each company. If the number of sample is N, then i = 1, 2, ..., N.

The primary simultaneous equation showing the foregoing causal association can be represented using the following matrix.

$$t = At + u \ldots\ldots\ldots\ldots\ldots\ldots\ldots\ldots\ldots\ldots\ldots\ldots\ldots \text{(Formula 2)}$$

Here, t is the "structure variable vector." Since the structure variable vector t is composed of the latent variable vector f and the observed variable vector v, this is represented as t = [f, v]' (" ' " indicates the transposition matrix).

f: Latent variable vector. The vector element is the latent variable describing the individual factors.

v: Observed variable vector. The vector element is the individual observable indexes, and let it be assumed that it is standardized so that the expected value E[v] of v: E[v] = 0.

Further, u is an "exogenous variable vector." Since the exogenous variable vector u is composed of the error variable vector d concerning f and the error variable vector e concerning v, this is represented as u = [d, e]' (" ' " indicates the transposition matrix).

d: Error variable vector. The vector element is $f_j$ itself when the error variable concerning the vector element of f or No. j element $f_j$ of f is an exogenous variable.

e: Error variable vector. The vector element is $v_k$ itself when the error variable concerning the vector element of v or the No. k element $v_k$ of v is an exogenous variable.

Further, A is a "coefficient parameter matrix." Since the coefficient parameter matrix A is composed of the coefficient matrix $A_a$, the coefficient matrix $A_b$, the coefficient matrix $A_c$, and the coefficient matrix $A_d$, this is represented as follows.

$$A = \begin{bmatrix} A_a & A_c \\ A_b & A_d \end{bmatrix}$$

$$\ldots\ldots\ldots\ldots\ldots\ldots\ldots\ldots\ldots\ldots\ldots\ldots\ldots\ldots\ldots \text{(Formula 3)}$$

$A_a$: Coefficient matrix in which the coefficient $\gamma_j$ representing the prescribing power from the latent variable $f_j$ to the latent variable $f_{j'}$ is arranged in the j'j element.

$A_b$: Coefficient matrix in which the coefficients $\lambda_k$ and $\kappa_k$ representing the prescribing power from the latent variable $f_j$ to the observed variable $v_k$ are arranged in the kj element.

$A_c$: Coefficient matrix in which the coefficient (does not exist in the path diagram shown in FIG. 2, and is therefore zero) representing the prescribing power from the observed variable $v_k$ to the latent variable $f_j$ is arranged in the jk element.
$A_d$: Coefficient matrix in which the coefficient (does not exist in the path diagram shown in FIG. 2, and is therefore zero) representing the prescribing power from the observed variable $v_k$ to the observed variable $v_{k'}$ is arranged in the k'k element.

In the example of FIG. 2, since there is no unidirectional arrow from the observed variable to the observed variable, and there is no unidirectional arrow from the observed variable to the latent variable, $A_c = 0$, $A_d = 0$.

Further, the unidirectional arrow from the latent variable to the latent variable and the unidirectional arrow from the latent variable to the observed variable will be as follows when represented from the example of FIG. 2.

$$A_a = \begin{bmatrix} 0 & 0 & 0 & 0 \\ 0 & 0 & 0 & 0 \\ 0 & 0 & 0 & 0 \\ \gamma_1 & \gamma_2 & \gamma_3 & 0 \end{bmatrix}$$

$$A_b = \begin{bmatrix} \lambda_1 & 0 & 0 & 0 \\ 0 & \lambda_2 & 0 & 0 \\ 0 & \lambda_3 & 0 & 0 \\ 0 & 0 & \lambda_4 & 0 \\ 0 & 0 & 0 & \kappa_5 \\ 0 & 0 & 0 & \kappa_6 \end{bmatrix}$$

.................................................... (Formula 4)

The example of FIG. 2 will be the following [Formula 5]. When [Formula 5] is substituted with [Formula 2], it will become the equivalent of [Formula 1].

$$t = [\quad f_{1i}\quad f_{2i}\quad f_{3i}\quad f_{4i}\quad v_{1i}\quad v_{2i}\quad v_{3i}\quad v_{4i}\quad v_{5i}\quad v_{6i}\quad]'$$

$$A = \begin{bmatrix} 0 & 0 & 0 & 0 & 0 & 0 & 0 & 0 & 0 & 0 \\ 0 & 0 & 0 & 0 & 0 & 0 & 0 & 0 & 0 & 0 \\ 0 & 0 & 0 & 0 & 0 & 0 & 0 & 0 & 0 & 0 \\ \gamma_1 & \gamma_2 & \gamma_3 & 0 & 0 & 0 & 0 & 0 & 0 & 0 \\ \lambda_1 & 0 & 0 & 0 & 0 & 0 & 0 & 0 & 0 & 0 \\ 0 & \lambda_2 & 0 & 0 & 0 & 0 & 0 & 0 & 0 & 0 \\ 0 & \lambda_3 & 0 & 0 & 0 & 0 & 0 & 0 & 0 & 0 \\ 0 & 0 & \lambda_4 & 0 & 0 & 0 & 0 & 0 & 0 & 0 \\ 0 & 0 & 0 & \kappa_5 & 0 & 0 & 0 & 0 & 0 & 0 \\ 0 & 0 & 0 & \kappa_6 & 0 & 0 & 0 & 0 & 0 & 0 \end{bmatrix}$$

$$u = [\quad f_{1i}\quad f_{2i}\quad f_{3i}\quad d_1\quad e_1\quad e_2\quad e_3\quad e_4\quad e_5\quad e_6\quad]'$$

$$\dots\dots\dots\dots\dots\dots\dots\dots\dots\dots\dots\dots\dots\dots\dots \text{(Formula 5)}$$

If the created coefficient parameter matrix A and the vector u composed of exogenous variables, the company's latent variable vector $f = \{f_1, f_2, f_3, f_4\}$ can be sought from the observed variable vector v of the company.

The foregoing was the schematic concept of using the covariance structure analysis in the present embodiment. The specific processing routine is now explained using the generalized equation of [Formula 2].

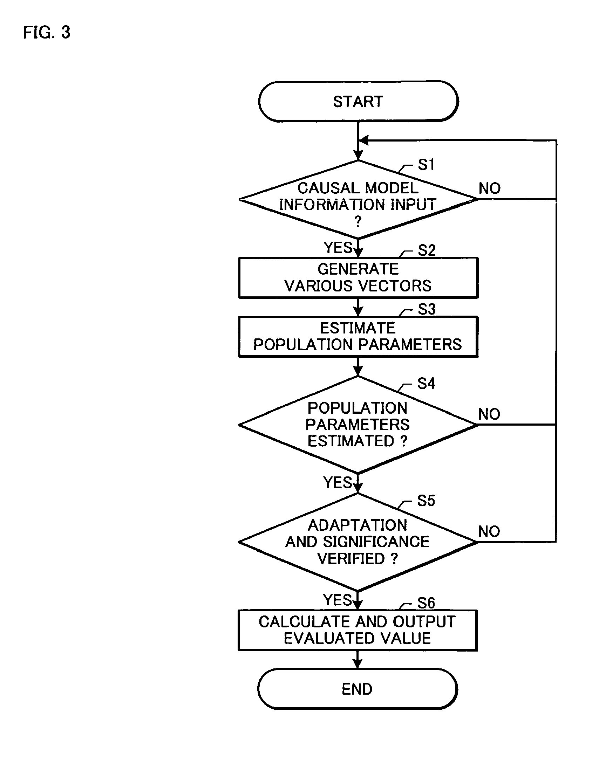

<3. Specific Routine of Covariance Structure Analysis (FIG. 3) >

FIG. 3 is a flowchart explaining the processing flow in the foregoing company evaluation assisting device. This processing is executed by the CPU 301 of the company evaluation assisting device 30 of FIG. 1.

Upon executing this processing, individual observable indexes (for instance, PBR, number of claims per inventor, total factor productivity and so on) regarding each company are prepared in advance in the external database or the internal database.

<3-1. Input of Causal Model Information: S1>

Foremost, at step S1, whether the causal model information hypothesized regarding the causal association was input from the input means 310 is determined. This causal model information, for instance, is represented with the foregoing primary simultaneous equation based on the path diagram shown in FIG. 2.

<3-2. Creation of Vector: S2>

When the causal model information is input, at step S2, the latent variable vector f, the exogenous variable vector d, the exogenous variable vector e, and the coefficient parameter matrix A are created based on the causal model information. Further, the observed variable vector v standardized so that the expected value E[v] = 0 by referring to the related observed variables of the external database or the internal database is created in the same number as the N number of samples.

<3-3. Estimation of Population Parameter: S3, S4>

Subsequently, at step S3, the population parameter is estimated based on the created latent variable vector f, exogenous variable vector d, exogenous variable vector e, coefficient parameter matrix A, and observed variable vector v. Here, the population parameter indicates the respective elements of the exogenous variable vector d, the exogenous variable vector e, and the coefficient parameter matrix A. The outline of estimating the population parameter is as follows.

<3-3-1. Representation by Population Parameter of Covariance Matrix>

Foremost, this is subject to representing the covariance matrix concerning the observed variables with the population parameter.
When O is 0 matrix and I is a unit matrix, [Formula 2] can be modified as follows.
(I-A)t = u
This formula can be modified as follows when I-A has an inverse matrix T.

$$t = Tu \quad\dots\dots\dots\dots\dots\dots\dots\dots\dots\dots\dots\dots\dots\dots\dots \text{(Formula 6)}$$

This formula can be further modified as follows when the matrix G in the form of [0, I] that satisfies v = Gt is applied from the left to both sides. Thereby, it is possible to extract only the variance-covariance matrix of the observed variables.

$$v = GTu \quad\dots\dots\dots\dots\dots\dots\dots\dots\dots\dots\dots\dots\dots\dots \text{[Formula 7]}$$

Meanwhile, it is publicly known to represent the covariance matrix $\Sigma v$ of v as follows using the expected value vector E[v] in which the expected values of the respective elements of the vector v are the elements.

$$\Sigma v = E[(v-E[v])(v-E[v])']$$
$$= E[vv'] \quad\dots\dots\dots\dots\dots\dots\dots\dots\dots\dots\dots\dots\dots \text{(Formula 8)}$$

Thus, the covariance matrix $\Sigma v$ regarding the observed variables can be represented with the population parameter as follows based on [Formula 8] and [Formula 7].

$$\Sigma v = E[GTuu'T'G']$$
$$= GT(\Sigma u)T'G' \quad\dots\dots\dots\dots\dots\dots\dots\dots\dots\dots\dots \text{(Formula 9)}$$

Incidentally, $\Sigma u = E[uu']$. If the variance of the element of f is hypothesized as 1, since $\Sigma u$ will be uniformly set forth without depending on the sample i, the covariance matrix $\Sigma v$ regarding the observed variables will be uniformly set forth.
If I-A does not have an inverse matrix T, the equation of [Formula 6] cannot be obtained. In this case, it is determined that the population parameter cannot be estimated at step S4, and the routine returns to step S1 and waits for new causal model information to be input.

<3-3-2. Maximum Likelihood Estimation Method>

After the covariance matrix is obtained, the population parameter is estimated using the maximum likelihood estimation method.
Foremost, the vector having the coefficient parameter matrix A and E[uu'] in [Formula 6] as elements is set to θ. Since the covariance matrix $\Sigma v$ of [Formula 6] can also be represented by θ, this is indicated as $\Sigma(\theta)$.

Generally, when the variable v is following the multivariate normal distribution, it is publicly known that the probability F(X|θ) in which the data matrix of the variable v is observed can be represented as follows.

$$F(X|\theta)$$

$$= \Pi_{(i;\ 1 \le i \le N)} (2\pi)^{(-n/2)} |\Sigma(\theta)|^{(-1/2)} \exp[(-1/2)v'\Sigma(\theta)^{(-1)}v]$$

$$\dotsb \qquad [\text{Formula } 10]$$

Here,
n: Dimension of vector v
N: Number of samples
$|\Sigma(\theta)|$: Determinant of matrix covariance matrix $\Sigma(\theta)$
$\Sigma(\theta)^{(-1)}$: Inverse matrix of covariance matrix $\Sigma(\theta)$.
$[(-1/2)v'\Sigma(\theta)^{(-1)}v]$ is the scalar quantity dependant on i.
The probability F(X|θ) is obtained by crossing the probability $(2\Pi)^{(-n/2)}|\Sigma(\theta)|^{(-1/2)}\exp[(-1/2)v'\Sigma(\theta)^{(-1)}v]$ in which the individual samples are observed regarding all samples from i = 1 to i = N.

Thus, θ that maximizes the probability F(X|θ) is set as the estimated value of the population parameter. In reality, the following function Fml organized by taking the natural logarithm of both sides of [Formula 7] is used to seek θ that maximizes Fml. As a result of seeking the logarithm, this can be treated as a monotonic increase function to facilitate the maximization.

$$Fml = tr(\Sigma(\theta)^{(-1)}S) - \ln|\Sigma(\theta)^{(-1)}S| - n \dotsb (\text{Formula } 11)$$

Here,
S: Covariance matrix Σv using data matrix of observed variables
tr(B): Sum of diagonal components of matrix B.

Upon seeking θ that maximizes the function Fml (or probability F(X|θ)), there are cases when the solution is not converged. In such a case, the solution of the primary simultaneous equation input at step S1 will be indefinite. Accordingly, it is determined that the population parameter cannot be estimated at step S4, and the routine returns to step S1 and waits for new causal model information to be input.

Incidentally, in the foregoing case, the causal model information based on the same path diagram subject to the restraint condition of the coefficient parameter may be input to estimate the population parameter once again. As a result of imposing the restraint condition on the coefficient parameter, the solution of the primary simultaneous equation can be uniquely sought.

Incidentally, the estimation method of the population parameter is not limited to the maximum likelihood estimation method. The least squares method, generalized least squares method, elliptic least squares method, elliptic generalized least squares method, elliptic re-weighting least squares method and other methods may be used.

<3-4. Verification of Adaptation and Significance: S5>

After the population parameter is estimated, adaptation of the causal model is verified at step S5. Verification of the adaptation uses the publicly-known adaptation index of GFI (Goodness of Fit Index) or AGFI (Adjusted Goodness of Fit Index), or both. GFI is an index showing what % the set causal model explained the data (covariance matrix Σv concerning the observed variable). The closer the value of GFI is to 1, the greater the power of explanation of the model. AGFI is an index that knocks off the instability of the population parameter from GFI in order to cover GFI's drawback (GFI improving even when the stability of the population parameter deteriorates when the causal model becomes complex). If GFI and/or AGFI is greater than a prescribed threshold value, adaptation is determined to exist.

Incidentally, when the GFI or AGFI has already been sought regarding a separate causal model and an inferior result is obtained, adaptation may be determined to be non-existent. Further, other indexes may also be jointly used in verifying the adaptation.

Further, verification of the significance regarding the individual population parameters is performed at step S5. Specifically, the primary linear equation corresponding to the 2 variables with an arbitrary unidirectional arrow in the path diagram is deemed to be a regression equation, and the true coefficient matrix of the population is set as $\Gamma$, wherein $(\theta-\Gamma) / (\mathrm{diag} (\Sigma (\theta)))^{1/2}$,

provided that $(\mathrm{diag}(C))^{1/2}$ is considered to be a diagonal matrix in which the square root of the diagonal element of the matrix C is the diagonal element. This quantity asymptotically follows the standard normal distribution. Accordingly, if the value substituted with $\Gamma = 0$ is of a given value or greater, since the hypothesis of $\Gamma = 0$ will be dismissed (significance of population parameter is not acknowledged), it is possible to acknowledge the significance of the population parameter.

When either the adaptation or the significance is not acknowledged, the routine returns to step S1 and waits for new causal model information to be input.

When the adaptation and the significance are acknowledged, the routine proceeds to subsequent step S6 and calculates the evaluated value. However, even when the adaptation and the significance are acknowledged, other causal models may be further verified for selecting the causal model with the highest adaptation.

<3-5. Calculation and Output of Evaluated Value: S6>

Subsequently, at step S6, the latent variable vector f is calculated from the observed variable vector v regarding each company based on the obtained population parameter, and set as the evaluated value.

In order to realize the above, Y should be foremost sought so f = Yv. When v' is applied to both sides from the right side,

fv' = Yvv'.

Here,

since S = $\Sigma$v

= vv' / (N-1),

fv' = (N-1) YS.

Thus,

Y = fv'S$^{(-1)}$/(N-1).

Meanwhile, when the matrix K in the form of [O, I] that satisfies f = Kt is used, based on [Formula 6] and [Formula 7],

fv' = Ktv'

= KTuv'

= KTuu'T'G'.

Thus, Y will be:

Y = KTuu'T'G'S(-1)/(N-1),

and $\Sigma$u = uu'/(N-1), Y can be sought with the following equation.

$$\mathrm{Y} = \mathrm{KT}(\Sigma\mathrm{u})\,\mathrm{T'G'S}^{(-1)} \quad \dots\dots\dots\dots\dots\dots\dots\dots\dots\dots \text{[Formula 12]}$$

The component of Y sought as above will become the weighting to be applied to the respective indexes. Accordingly, if the observed variable vector v of the company to be evaluated is substituted for f = Yv, the latent variable vector f can be sought. All or a part of the vector elements $f_1$ to $f_4$ of the sought latent variable vector f is output as the business strategy evaluated value, the R&D strategy evaluated value, the intellectual property strategy evaluated value or the company evaluated value of the company to be evaluated from the display means 312 or the printer 31 as the output means. Or, any one of the vector elements $f_1$ to $f_4$ is sought regarding each company, sorted in descending order, placed in a ranking regarding the vector element, and output from the display means 312 or the printer 31 as the output means.

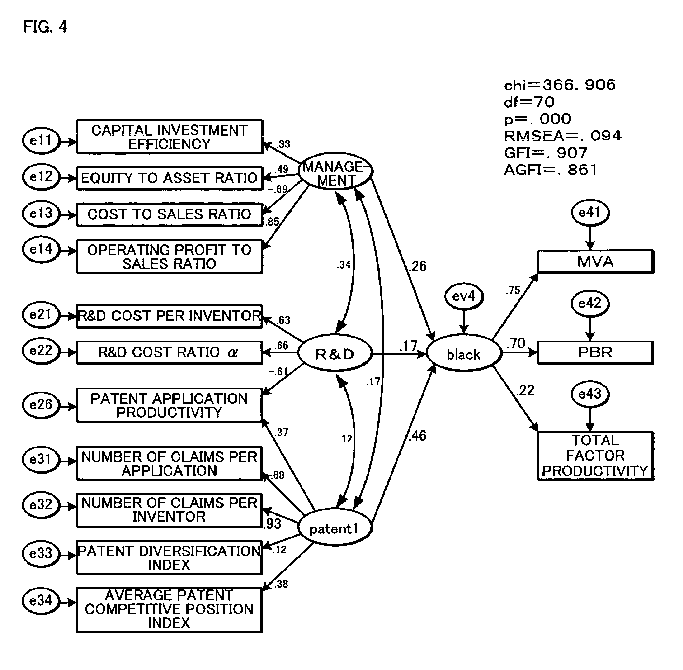

<4. Specific Examples (FIG. 4 to FIG. 8)>

<4-1. Common Items>

FIG. 4 to FIG. 8 are examples of path diagrams applied to the company evaluation assisting device. These path diagrams are written with the population parameter calculated at the foregoing population parameter estimation step S3.

In these examples, analysis of 486 companies in the 5 industries of pharmaceutical products, chemicals, automobiles/transportation equipment, electronics and precision equipment in Japan is shown.

As explained above, the 3 evaluated values of business strategy evaluated value, R&D strategy evaluated value, and intellectual property strategy evaluated value, and the

company evaluated value are used as the latent variables $f_1$ to $f_4$, and the front 3 evaluated values are hypothesized as causal models that influence the company evaluated value. In FIG. 4 to FIG. 8, the labels of "management," "R&D," and "patent 1" are respectively affixed to the front 3 evaluated values, and the label of "black" is affixed to the company evaluated value.

Further, the bidirectional arrows mutually connecting the front 3 evaluated values show the correlation coefficients when selecting 2 evaluated values among the 3 evaluated values.

Further, "$e_{11}$," "$e_{12}$" and the like shown in FIG. 4 to FIG. 8 are error variables in which factors other than the latent variables give fluctuation to the respective observable indexes, and "ev4" is an error variable that gives fluctuation to the company evaluated value.

As the observable indexes, a plurality of kinds of combinations are extracted from the 79 indexes listed in [Table 1] to [Table 6], respective combinations are analyzed, and the combinations with high adaptation are shown in FIG. 4 to FIG. 8. Incidentally, the 79 indexes are shown by being classified in the business/management related index of [Table 1] and [Table 2], the R&D related index of [Table 3], and the intellectual property related index of [Table 4] to [Table 6].

Upon performing the analysis, the third quarter average value from 1999 to 2001 was used as the R&D related index. The third quarter average value from 2000 to 2002 (provided with respect to indexes concerning registered patents such as the patent registration related index and total number of effective patents, the third quarter average value from 2001 to 2003 was used) as the intellectual property related index. The third quarter average value from 2001 to 2003 was used as the business/management related index. In other words, the time lag from R&D investment to patent application was hypothesized as 1 year, and the time lag from patent application to patent registration and commercialization was also hypothesized as 1 year.

[Table 1]

| Business/Management Related Index (1) | | |
|---|---|---|
| Index Group | Index | Definition (Formula) |
| Investment Related | Facility Investment Amount | [(Current Term Tangible Fixed Assets - Previous Term Tangible Fixed Assets)] + (Current Term Depreciation Cost) |
| | Investment Trend Index | Term-on-Term Ratio of [(Facility Investment Amount) + (R&D Cost)] |
| Management / Finance Analysis Related | Facility Investment Efficiency | (Value Added Amount) / (Tangible Fixed Assets) |
| | Labor Productivity | (Value Added Amount) / (Number of Employees) |
| | Labor Equipment Ratio | (Tangible Fixed Assets) / (Number of Employees) |
| | Labor Distribution Share (To Value Added) | {(Personnel Expense to be Included in Selling Cost and Administrative Expenses) + (Labor Cost to be Included in Manufacturing Cost)} / (Value Added Amount) |
| | Total Factor Productivity | (Value Added Amount Rate of Change) - {(1 - Labor Distribution Share (To Value Added)) $\times$ (Depreciation Target Tangible Fixed Assets Rate of Change)} - [(Labor Distribution Share (To Value Added)) $\times$ (Number of Employees Rate of Change)} |
| | Cost-to-Sales Ratio | (Cost of Sales) / (Sales Volume) |
| | Cost of Sales-and-Administration Ratio to Sales | (Selling Cost and Administrative Expenses) / (Sales Volume) |
| | Interest Bearing Debt Ratio | (Interest Bearing Debt) / (Total Assets) |

(continued)

| Business/Management Related Index (1) | | |
|---|---|---|
| Index Group | Index | Definition (Formula) |
| | Equity to Asset Ratio | (Equity Capital) / (Total Assets) |
| | Stock Price | (Stock Price) |
| Profit Related | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) - (Interest Paid and Discount) |
| | Gross Business Profit (GOP) | (Operating Profit) + (R&D Cost) |
| | Gross Operating Profit (GBP) | (Gross Business Profit (GOP)) + (Patent Royalty Income) |
| | Earnings Before Interest, Taxes, Depreciation Amortization (EBITDA) | and (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA $\alpha$ | {(Value Added Amount) + (Patent Royalty Income)} / (Total Assets) |
| | ROA $\beta$ | {(GOP) + (Patent Royalty Income)} / (Total Assets) |
| | ROA $\gamma$ | {(EBITDA) + (Patent Royalty Income)} / (Total Assets) |
| | ROA $\delta$ | {(Operating Profit) + (Patent Royalty Income)} / (Total Assets) |
| | Earnings on Intellectual Assets (EOIA) | {(GOP) + (Patent Royalty Income)} - [(Financial Assets) $\times$ (Profit Ratio m)} + [(Tangible Fixed Assets) $\times$ (Profit Ratio f)} (Profit Ratio m): Application of Short Term Prime Rate: (Profit Ratio f): Application of Long Term Prime Rate |
| | Return On Intellectual Assets (ROIA) (=ROA $\varepsilon$) | (Earnings on Intellectual Assets) / (Total Assets) |

[Table 2]

| Business/Management Related Index (2) | | |
|---|---|---|
| Index Group | Index | Definition (Formula) |
| Excess Profit Related | Excess Value Added Amount | Sales Volume × {(Sales Volume Value Added Ratio) - (Industry Average Sales Volume Value Added Ratio)} |
| | Excess GOP | Sales Volume × {(Sales Volume GOP Ratio) - (Industry Average Sales Volume GOP Ratio)} |
| | Excess GBP | Sales Volume × {(Sales Volume GBP Ratio) - (Industry Average Sales Volume GBP Ratio)} |
| | Excess EBITDA | Sales Volume × {(Sales Volume EBITDA Ratio) - (Industry Average Sales Volume EBITDA Ratio)} |
| | Excess Operating Profit | Sales Volume × {(Operating Profit Ratio (To Sales)) - (Industry Average Operating Profit Ratio (To Sales))} |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA ($\delta$) - (Industry Average ROA $\delta$) |
| | Excess Earnings on Intellectual Assets (EXEOIA) | (Total Assets = Average of Term Beginning and Term End) × {(Return on Intellectual Assets) - (Industry Average of Return on Intellectual Assets) |
| Market Valuation Related | Market Value Added (MVA: Actual Value) | (Total Number of Outstanding Shares) × (Stock Price) - (Shareholders' Equity) |
| | Market Value Added (MVA: Theoretical Value) (MVA: | Present Value of Economic Value Added in Future = [{(R&D Cost) + (Operating Profit Theoretical Value + Patent Royalty Income) × (1 - Corporate Tax Rate)} - {(Interest Bearing Debt) + (Equity Capital)} × (WACC)] / (Capital Cost) |
| | Price Book-value Ratio (PBR) | (Aggregate Market Value) / (Equity Capital) |
| | Expected Intellectual Property Profit (EIPP) | {(Fixed Liabilities) × (Profit Ratio a) + (Aggregate Market Value) × (Profit Ratio p)}- (Profit Ratio p)} - {(Financial Assets) × (Profit Ratio m) + (Tangible Fixed Assets) × (Profit Ratio f)} (Profit Ratio (Profit Ratio f)} (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds. Stock Investment Profit Ratio. $\beta$ Value were used; (Profit Ratio m): Application of Short Term Prime Rate (Profit Ratio f): Application of Long Term Prime Rate |

[Table 3]

| R&D Related Index | | |
|---|---|---|
| Index Group | Index | Definition (Formula) |
| R&D Related | R&D Cost | Total Amount of R&D Cost (Desirable to Use Average Value of Several Terms) |
| | R&D Stock | Cumulative Total Amount of R&D Cost |
| | Number of Inventors | (Calculated Based on "Inventor" Column of Laid-Open Publications) |
| | Inventor Stock | Cumulative Number of Inventors |
| | Inventor Ratio | (Number of Inventors) / (Number of Employees) |
| | R&D Cost per Inventor | (R&D Cost) / (Number of Inventors) |
| R&D Efficiency Related | R&D Cost Ratio $\alpha$ | (R&D Cost) / (Sales Volume) |
| | R&D Cost Ratio $\beta$ | (R&D Cost) / (Value Added Amount) |
| | R&D Cost Ratio $\gamma$ | (R&D Cost) / (GOP) |
| | R&D Cost Ratio $\delta$ | (R&D Cost) / (Total Assets) |
| | R&D Efficiency $\varepsilon$ | (Operating Profit) / (R&D Cost) (Desirable to Use Average Value of Several Terms for R&D Cost) |
| | Patent Application Productivity | (Number of Claims of Patent Applications) / (R&D Cost) (The Number of Claims May be the Number of Claims in Each Section (A to H) and the Number of Claims May be replaced by the Number of Patent Applications) (Average Value of Several Terms is Desirable for the R&D Cost) |
| | Examination Request Productivity | Correction of (Patent Application Productivity). (Patent Application Productivity) $\times$ (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) $\times$ (Estimated Registration Ratio) (Estimated Registration Ratio: Sought Based on Number of Registrations of Previous Applications. Lapsed Years. Average Years to Patent Granted) |

[Table 4]

| Intellectual Assets Related Index (1) | | |
|---|---|---|
| Index Group | Index | Definition (Formula) |
| | Number of Patent Applications | (Joint Application is Recorded as One Application) |
| | Patent Application Stock | (Cumulative Number of Patent Applications) |
| | Cumulative Patent Applications (A to H) | (Cumulative Patent Applications by Section) |

(continued)

| Intellectual Assets Related Index (1) | | |
|---|---|---|
| Index Group | Index | Definition (Formula) |
| Patent Application Related | Number of Claims Filed | (Sum of "Number of Claims" of Laid-Open Publications) |
| | Number of Claims per Patent Application | (Number of Claims Filed) / (Number of Patent Applications) |
| | Application per Inventor | (Number of Patent Applications) / (Number of Inventors) (Number of Patent Applications Does Not Include Joint Applications) |
| | Number of Claims per Inventor (Patent Application) | (Number of Claims Filed) / (Number of Inventors) |
| | Number of Joint Applications | (Number of Joint Applications Among Patent Applications Filed) |
| | Joint Filing Ratio | (Number of Joint Applications)/ (Number of Patent Applications) |
| | Number of Applicants in Joint Filing | (Number of Joint Applicants in Joint Applicaions) |
| | Number of Applications Top Ranking Inventors Involved | Number of Applications in which M Number of Top Ranking Inventors Within the Company Involved [This May be in a Single Year or Cumulative Total of Several Years] |
| Examination Request Related | Number of Examination Requests | (Number of Examination Requests Filed) |
| | Number of Examination Requests Filed by Section | (Number of Examination Requests of Each Section (A to H)) |
| | Years to Examination Request (Average) | {Σ (Date of Examination Request - Filing Date)} / {(Number of Examination Requests) × (Annual Number of Days)} |
| | Examination Request Ratio | (Examination Request Ratio Pertaining to Number of Patent Applications of Each Year) |
| | Cumulative Number of Examination Requests | (Cumulative Number of Examination Requests) |
| | Examination Request Ratio (to Patent Application Stock) | (Cumulative Number of Examination Requests) / (Cumulative Patent Applications Filed) |
| | Number of Patents Granted | (Number of Patents Granted) |
| | Registrations by Section | (Number of Registrations by Section (A to H)) |
| | Number of Registered Claims | (Number of "Claims" in Registered Gazette) |
| | Patent Granted per Inventor | (Number of Registrations) / (Number of Inventors) |

(continued)

| Intellectual Assets Related Index (1) | | |
|---|---|---|
| Index Group | Index | Definition (Formula) |
| Patent Granted (Registrated) Related | Number of Claims per Inventor (Patent Granted) | (Number of Registered Claims) / (Number of Inventors) |
| | Years to Patent Granted (Average) | {Σ (Patent Registration Date - Patent Filing Date)} / {(Number of Patents Granted) ×(Annual Number of Days)} |
| | Patent Granted Ratio (to Number of Applications) | (Number of Patents Granted Each Year) / (Number of Patent Applications Filed Each Year) |
| | Patent Granted Stock | (Patent Granted Stock at the End of Each Year) |
| | Patent Granted Ratio (to Application Stock) | (Patent Granted Stock) / (Patent Application stock) |
| | Patent Granted Ratio (to Number of Examination Requests) | (Number of Patents Granted Each Year) / (Number of Examination Requests Filed Each Year) |
| | Patent Granted Stock Ratio | (Patent Granted Stock) / (Cumulative Number of Examination Requests) |
| | Effective Number of Patents Granted | (Number of Patents Granted Each Year) - (Number of Patents Invalidated Among Patent Registrations Each Year) |
| | Patent Granted Renewal Ratio | (Effective Number of Patents Granted Among Patent Registrations Each Year) / (Number of Patents Granted Each Year) |

[Table 5]

| Intellectual Assets Related Index (2) | | |
|---|---|---|
| Index Group | Index | Definition (Formula) |
| | Number of Oppositions and Invalidation Trials (as Defendant) | Number of Patents Subject to Oppositions or Invalidation Trials (as Defendant) in Each Year (This May be an Overall Total, Total Number of Several Years, or Average in Several Years) |
| | Ratio of Number of Oppositions and Invalidation Trials (as Defendant) to Number of Patent Application | Ratio of Number of Oppositions and Invalidation Trials in Each Year (as Defendant) to Number of Applications Filed in Same Year = (Number of Patents Subject to Oppositions or Invalidation Trials (as Defendant) in Each Year of a Certain Company)/(Number of Patent Applications Filed by Said Company in Same Year) |

(continued)

| Intellectual Assets Related Index (2) | | |
|---|---|---|
| Index Group | Index | Definition (Formula) |
| Items Related Ratio Items Related to Oppositions and Invalidation Trials Filed (as Defendant) | Ratio of Number of Oppositions and Invalidation Trials (as Defendant) to Number of Patent Granted | Ratio of Number of Oppositions and Invalidation Trials in Each Year (as Defendant) to Number of Patents Granted in Same Year = (Number of Patents Subject to Oppositions or Invalidation Trials Filed (as Defendant))/(Number of Patents Granted to Said Company in Same Year) |
| | Weighted Number of Oppositions and Invalidation Trials (as Defendant) | Number of Opponents to Patents Subject to Oppositions or Invalidation Trials (as Defendant) in Each Year = Σ (Number of Patents N Subject to Oppositions or Invalidation Trials (as Defendant)) × (Number of People Who Filed Oppositions or Patents N Subject to Oppositions or Invalidation. Trials (as Defendant)) × (Number of People Who Filed Oppositions or Invalidation Trials Against the N Patents) |
| | Ratio of Weighted Number of Oppositions and Invalidation Trials (as Defendant) to Number o Patent Application | Ratio of Number of Opponents to Patents Subject to Oppositions or Invalidation Trials (as Defendant) in Each Year to Number f of Applications Filed by the Company in Same Year = Σ (Number of Patents N Subject to Oppositions or Invalidation Trials (as Defendant)) × (Number of People Who Filed Oppositions or Invalidation Trials Against the N Patents)] /(Number of Applications Filed by Said Company in Same Year) |
| | of Weighted Number of Oppositions and Invalidation Trials (as Defendant) to Number of Patent Granted Patent Granted | Ratio of Number of Opponents to Patents Subject to Oppositions or Invalidation Trials (as Defendant) in Each Year to Number of Patents Granted to the Company in Same Year = [ Σ (Number of Patents N Subject to Oppositions or Invalidation Trials (as Defendant)) × (Number of People Who Filed Oppositions or Invalidation Trials Against the N Patents)) /(Number of Patents Granted to Said Company in Same Year) |

(continued)

| Intellectual Assets Related Index (2) | | |
| --- | --- | --- |
| Index Group | Index | Definition (Formula) |
| | Relative Value of Number of Oppositions and Invalidation Trials (as Defendant) Invalidation Trials (as Defendant) | Ratio to Average Number in Industry in Relation to Number of Patents Subject to Oppositions or Invalidation Trials (as Defendant) in Each Year = (Number of Patents Subject to Oppositions or Invalidation Trials (as Defendant) in Each Year of a Certain Company)/(Average Number in Industry of Said Company in Same Year) |
| | Relative Value of Weighted Number of Oppositions and Invalidation Trials (as Defendant) | Ratio to Average Number in Industry in Relation to Weighted Number of Patents Subject to Oppositions or Invalidation Trials (as Defendant) in Each Year = {$\Sigma$ (Number of Patents N Subject to Oppositions or Invalidation Trials (as Defendant)) $\times$ (Number of People Who Filed Oppositions or Invalidation Trials Against the N Patents)}/(Average Number of People in Industry of Said Company in Same Year) |
| | Relative Value of Ratio of Number of Oppositions and Invalidation Trials (as Defendant) to Number of Patent Application | Ratio to Average Ratio in Industry in Relation to Ratio of Number of Oppositions and Invalidation Trials (as Defendant) in Each Year to Number of Applications = (Ratio of Number of Oppositions and Invalidation Trials (as Defendant) in Each Year of a Certain Company to Number of Applications)/(Average Rario in Industry of Said Company in Same Year) |
| | Relative Value of Ratio of Weighted Number of Oppositions and Invalidation Trials (as Defendant) to Number of Patent Application | Ratio to Average Ratio in Industry in Relation to Ratio of Weighted Number of Oppositions and Invalidation Trials (as Defendant) in Each Year to Number of Applications = (Ratio of Weighted Number of Oppositions and Invalidation Trials (as Defendant) in Each Year of a Certain Company to Number of Applications)/(Average Ratio in Industry of Said Company in Same Year) |

(continued)

| Intellectual Assets Related Index (2) | | |
|---|---|---|
| Index Group | Index | Definition (Formula) |
| | Relative Value of Ratio of Number of Oppositions and Invalidation Trials (as Defendant) to Number of Patent Granted | Ratio to Average Ratio in Industry in Relation to Ratio of Number of Oppositions and Invalidation Trials (as Defendant) in Each Year to Number of Patents Granted = (Ratio of Number of Oppositions and Invalidation Trials (as Defendant) in Each Year of a Certain Company to Number of Patents Granted)/ (Average Ratio in Industry of Said Company in Same Year) |
| | Relative Value of Ratio of Weighted Number of Oppositions and Invalidation Trials (as Defendant) to Number of Patent Granted | Ratio to Average Ratio in Industry in Relation to Ratio of Weighted Number of Oppositions and Invalidation Trials (as Defendant) in Each Year to Number of Patents Granted = (Ratio of Weighted Number of Oppositions and Invalidation Trials (as Defendant) in Each Year of a Certain Company to Number of Patents Granted)/ (Average Ratio in Industry of Said Company in Same Year) |
| Citation/ Reference Related | Number of Citations (as Patentee) | Number of Times a Certain Patent was Cited in Rejections of Other Patents (This May be an Overall Total. Total Number of Several Years. or Average in Several Years) |
| | Number of Requests for Inspection/ Delivery | Number of Requests for File Wrapper of a Certain Patent (This May be an Overall Total, Total Number of Several Years, or Average in Several Years) |
| | Number of Appeal Trials Filed | Number of Appeal Trials Filed by a Certain Company [This May be the Number of Cases in a Single Year or Several Years] |

[Table 6]

| Intellectual Assets Related Index (3) | | |
|---|---|---|
| Index Group | Index | Definition (Formula) |
| | Total Number of Effective Patents | (Patent Granted Stock) - (Patent Invalidation Stock) [This May be of a certain time, or an Average in Several Years] |

(continued)

| Intellectual Assets Related Index (3) | | |
|---|---|---|
| Index Group | Index | Definition (Formula) |
| Patent Stock Related | Total Share of Effective Patents | $\Sigma$ {(Number of Effective Patents of Company by Each International Patent Classification)/(Total Number of Effective Patents by Each International Patent Classification)} [This May be of a certain time, or an Average in Several Years] |
| | Total Patent Granted Renewal Ratio | (Total Number of Effective Patents)/ (Patent Granted Stock) [This May be of a certain time, or an Average in Several Years] |
| | Years to Renewal Patent Granted Expiration (Average) | {$\Sigma$ (Scheduled Invalidation Date of Each Patent of the Total Number of Effective Patents - Year End)} / {(Total Number of Effective Patents) $\times$ (Annual Number of Days)} |
| | Patent Stock Index | (Total Number of Effective Patents) $\times$ (Years to Renewal Patent Granted Expiration (Average)) [This May be of a certain time, or an Average in Several Years] |
| | Total Patent Assets | {(R&D Cost)/(Number of Patents Granted)} $\times$ (Total Number of Effective Patents) [R&D Cost May be in a Single Year or Cumulative Total of Several Years] |
| Patent Concentration Index Related | Share of Claims Filed (A to H) | (Number of Claims Filed by Company in One of International Patent Classification Sections A to H)/(Total Number of Claims Filed in the Same International Patent Classification Section) [Number of Claims May be of a Single Year, or a Cumulative Total of Several Years] |
| | Patent Concentration Index | $\Sigma$ [{(Number of Claims Filed by Company by Subclasses in International Patent Classification)/ (Total Number of Claims Filed by Company)}$^2$] |
| | Patent Concentration Index (A to H) | Patent Concentration Index by Each of International Patent Classification Sections A to H |
| | Patent Diversification Index (PDI) | {1 - (Patent Concentration Index)} [The Patent Concentration Index May be by a Section or All Sections] |

(continued)

| Intellectual Assets Related Index (3) | | |
|---|---|---|
| Index Group | Index | Definition (Formula) |
| | Patent Competitive Position Index (PCPI) | $\Sigma[\{\Sigma$ (Share of Each Company in Each Technical Field)$^2\} \times$ (Company Share in Each Technical Field)] $\times$ (1 + Excess Growth Ratio) [(1 + Excess Growth Ratio) Does Not Have to be Multiplied. The Technical Field is IPC Subclass or the like.] |
| | Average Patent Competitive Position Index (Average PCPI) | (Company PCPI)/(Number of Technical Fields covered by Company's Patent Applications) [This May be of a Single Year, or an Average in Several Years] |
| Patent Profitability Related | Patent Profitability $\alpha$ | {(Gap) + (Patent Royalty Income)} / (Total Number of Effective Patents) [This May be of a Single Year, or an Average in Several Years] |
| | Patent Profitability $\beta$ | {(Excess Value Added) + (Patent Royalty Income)}/(Total Number of Effective Patents) [This May be of a Single Year, or an Average in Several Years] |
| | Patent Profitability $\gamma$ | {(Excess GOP) + (Patent Royalty Income)} /(Total Number of Effective Patents) [This May be of a Single Year, or an Average in Several Years] |
| | Patent Profitability $\delta$ | {(Excess Earnings on Intellectual Assets) + (Patent Royalty Income)}/(Total Number of Effective Patents) [This May be of a Single Year, or an Average in Several Years] |
| Patent Power Related | Patent Desire Index | Degree of Company's Intention to Acquire Patents. Aggregation of Examination Request Ratio (to Patent Application Stock), Patent Granted Ratio (to Examination Requested Stock) and so on Based on Generalized Linear Model (Generalized Linear Model: Analysis of Variance. Factor. Principle Component, Covariance Structure, Multivariance Analysis and so on) |

(continued)

| Intellectual Assets Related Index (3) | | |
| --- | --- | --- |
| Index Group | Index | Definition (Formula) |
| | Check Power Against Other Company Index | Degree of Suppressing Rights of Other Companies, and Improving Value of One's Patent. Aggregation of Patent Oppositions (as Defendant), Number of Citations of Other Companies and so on Based on Generalized Linear Model.) (Generalized Linear Model: Analysis of Variance. Factor. Principle Component. Covariance Structure. Multivariance Analysis and so on) |

<4-2. Example of FIG. 4>

<4-2-1. Explanation of Path Diagram>

The individual examples are now explained.

As evident from FIG. 4, in this causal model, with respect to the influences (contribution ratios) of the other 3 evaluated values on the company evaluated value (black), the business strategy evaluated value (management) was approximately 26%, the R&D strategy evaluated value (R&D) was approximately 17%, and the intellectual property strategy evaluated value (patent 1) was 46%.

Further, when viewing the mutual correlation coefficients of the 3 evaluated values, correlation between "management" and "patent 1" was 0.17, correlation between "patent 1" and "R&D" was 0.12, and correlation between "R&D" and "management" was 0.34, and they respectively shown a weak correlation.

Here, the company evaluated value (black) is set as a potential factor existing between the 3 evaluated values (latent variables) of business strategy evaluated value (management), R&D strategy evaluated value (R&D) and intellectual property strategy evaluated value (patent 1), and the 3 indexes (observed variables) of MVA (difference between aggregate market value and shareholder's equity), PBR (price book value ratio) and total factor productivity (technical progress ratio).

Since the market valuation indexes of MVA and PBR were used as the indexes that are influenced by the company evaluated value (black), it is possible to reflect the market valuation on the off-balance intangible assets such as the know-how and intellectual property of each company when the market value exceeds the book value. Contrarily, when the market value is less than the book value, it can be considered that the market is evaluating the company as hardly possessing off-balance intangible assets or lacking the capacity to making such assets the source of profits, and, therefore, this market valuation can be reflected.

Nevertheless, there are restrictions in the evaluation of intangible assets obtained from the market valuation index. This is because unrelated noise may be included in the evaluation of intangible assets since the market value becomes unfairly low or high due to the macro-economic environment and the asymmetrical nature of information existing between the company and market. Thus, in addition to the market valuation index, the "total factor productivity" is used as an index that is influenced by the company evaluated value (black). Here, the "total factor productivity" is obtained by subtracting the value added amount rate of change including the contribution of equipment and manpower from the rate of change of the "value added amount" in each business year of each company.

Further, as the indexes that are influenced by the business strategy evaluated value (management), the four indexes of "facility investment efficiency," "equity to asset ratio," "cost to sales ratio" and "operating profit to sales ratio" were selected.

Subsequently, as the indexes that are influenced by the R&D strategy evaluated value (R&D), the three indexes of "R&D cost ratio $\alpha$," "R&D cost per inventor" and "patent application productivity" were selected.

Finally, as the indexes that are influenced by the intellectual property strategy evaluated value (patent 1), the five indexes of "number of claims per application," "number of claims per inventor," "patent diversification index," "average patent competitive position index" and "patent application productivity" were selected. Incidentally, as other useful indexes that are influenced by the intellectual property strategy evaluated value (patent 1), there are the indexes of "patent desire index," "check power against other company index," "total share of effective patents" and the like.

The definition and calculation formula of the respective indexes are as shown in [Table 1] to [Table 6].

The combinations of indexes shown in FIG. 4 are those with the highest model adaptation. Specifically, based on the chi-squared test, $\chi^2 = 366.906$ (degree of freedom df = 70, p value = 0.000). Further, RMSEA (Root Mean Square Error of Approximation) = 0.094, GFI = 0.907, AGFI = 0.861.

<4-2-2. Weighting>

Further, the weighting (component of matrix Y) to be applied to the respective indexes for calculating the respective evaluated values at evaluated value calculation step S6 is as follows in the example of FIG. 4. The digit of $10^{-5}$ was rounded off.

[Table 7]

|  | Total factor productivity | Average patent competitive position index | Patent diversification index | Patent application productivity | R&D cost ratio $\alpha$ |
|---|---|---|---|---|---|
| management | 0.0055 | 0.0008 | 0.0002 | -0.0215 | 0.0233 |
| R&D | 0.0042 | 0.0043 | 0.0012 | -0.2228 | 0.2351 |
| patent1 | 0.0055 | 0.0514 | 0.0140 | 0.0626 | 0.0169 |
| black | 0.0455 | 0.0079 | 0.0022 | -0.0108 | 0.0236 |

|  | Operating profit to sales ratio | MVA | Cost to sales ratio | R&D cost per inventor | Number of claims per inventor |
|---|---|---|---|---|---|
| management | 0.6015 | 0.0394 | -0.2579 | 0.0210 | 0.0120 |
| R&D | 0.0410 | 0.0302 | -0.0176 | 0.2117 | 0.0648 |
| patent 1 | 0.0055 | 0.0401 | -0.0024 | 0.0152 | 0.7769 |
| black | 0.0540 | 0.3285 | -0.0232 | 0.0212 | 0.1199 |

|  | Number of claims per application | Facility investment efficiency | Equity to asset ratio | PBR |  |
|---|---|---|---|---|---|
| management | 0.0022 | 0.0717 | 0.1236 | 0.0325 |  |
| R&D | 0.0119 | 0.0049 | 0.0084 | 0.0249 |  |
| patent 1 | 0.1425 | 0.0007 | 0.0011 | 0.0330 |  |
| black | 0.0220 | 0.0064 | 0.0111 | 0.2704 |  |

According to the above,
(1) Indexes with large weighting for calculating the business strategy evaluated value (management) are as follows:

"operating profit to sales ratio" which is 0.6015, "equity to asset ratio" which is 0.1236,
"facility investment efficiency" which is 0.0717,
"MVA" which is 0.0394, and
"PBR" which is 0.0325.

Further, an index in which the weighting is a large negative value of an absolute value is as follows:

"cost to sales ratio" which is -0.2579.

(2) Indexes with large weighting for calculating the R&D strategy evaluated value (R&D) are as follows:

"R&D cost ratio $\alpha$" which is 0.2351,
"R&D cost per inventor" which is 0.2117, and

"number of claims per inventor" which is 0.0648.

Further, an index in which the weighting is a large negative value of an absolute value is as follows:

"patent application productivity" which is -0.2228.

(3) Indexes with large weighting for calculating the intellectual property strategy evaluated value (patent 1) are as follows:

"number of claims per inventor" which is 0.7769,
"number of claims per application" which is 0.1425, and
"patent application productivity" which is 0.0626.

(4) Indexes with large weighting for calculating the company evaluated value (black) are as follows:

"MVA" which is 0.3285,
"PBR" which is 0.2704,
"number of claims per inventor" which is 0.1199, "operating profit to sales ratio" which is 0.0540, and
"total factor productivity" which is 0.0454.

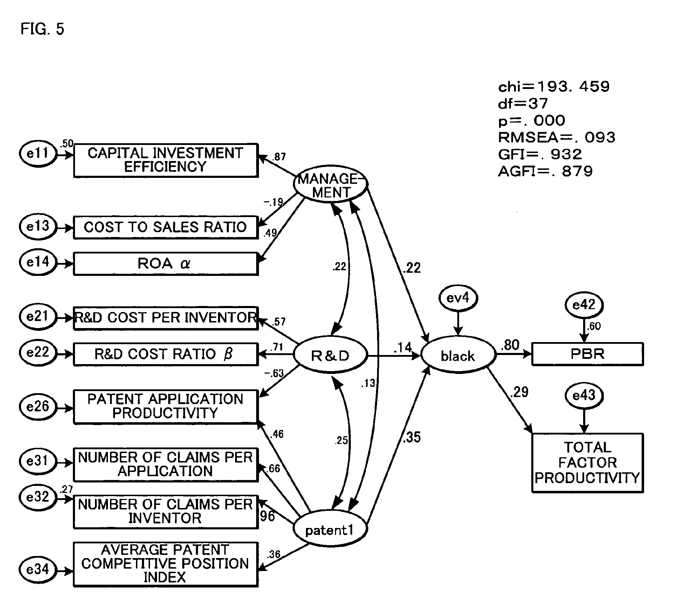

<4-3. Example of FIG. 5>

<4-3-1. Explanation of Path Diagram>

As evident from FIG. 5, in this causal model, with respect to the influences (contribution ratios) of the other 3 evaluated values on the company evaluated value (black), the business strategy evaluated value (management) was approximately 22%, the R&D strategy evaluated value (R&D) was approximately 14%, and the intellectual property strategy evaluated value (patent 1) was 35%.
Further, when viewing the mutual correlation coefficients of the 3 evaluated values, correlation between "management" and "patent 1" was 0.13, correlation between "patent 1" and "R&D" was 0.25, and correlation between "R&D" and "management" was 0.22, and they respectively shown a weak correlation.
In the example of FIG. 5, unlike FIG. 4, MVA was not used as the index that will be influenced by the company evaluated value (black). Thereby, fluctuation of the company evaluated value caused by the business size can be reduced.
Further, indexes that are influenced by the other 3 evaluated values that are slightly different from those in FIG. 4 were used, and comparatively high adaptation was obtained.
Specifically, the three indexes of "facility investment efficiency," "cost to sales ratio" and "ROAα" were selected as the indexed that are influenced by the business strategy evaluated value (management).
Subsequently, the three indexes of "R&D cost ratio β," "R&D cost per inventor" and "patent application productivity" were selected as the indexed that are influenced by the R&D strategy evaluated value (R&D).
Finally, the four indexes of "number of claims per application," "number of claims per inventor," "average patent competitive position index" and "patent application productivity" were selected as the indexes that are influenced by the intellectual property strategy evaluated value (patent 1).
The definition and calculation formula of the respective indexes are as shown in [Table 1] to [Table 6].
According to the combinations of indexes shown in FIG. 5, based on the chi-squared test, $\chi^2$ = 193.459(degree of freedom df = 37, p value = 0.000). Further, RMSEA (Root Mean Square Error of Approximation) = 0.093, GFI = 0.932, AGFI = 0.879.

<4-3-2. Weighting>

Further, the weighting (component of matrix Y) to be applied to the respective indexes for calculating the respective evaluated values at evaluated value calculation step S6 is as follows in the example of FIG. 5. The digit of $10^{-5}$ was rounded off.

[Table 8]

| | Total factor productivity | Average patent competitive position index | Patent application productivity | R&D cost R&D cost ratio β | ROA α |
|---|---|---|---|---|---|
| management | 0.0059 | 0.0004 | -0.0119 | 0.0153 | 0.1260 |
| R&D | 0.0047 | 0.0045 | -0.2424 | 0.3023 | 0.0058 |
| patent 1 | 0.0035 | 0.0287 | 0.0402 | 0.0215 | 0.0007 |
| black | 0.0811 | 0.0036 | -0.0121 | 0.0233 | 0.0110 |

| | Cost to sales ratio | R&D cost per inventor | Number of claims per inventor | Number of claims per application | Facility investment efficiency |
|---|---|---|---|---|---|
| management | -0.0370 | 0.0092 | 0.0121 | 0.0011 | 0.6796 |
| R&D | -0.0017 | 0.1820 | 0.1381 | 0.0124 | 0.0311 |
| patent | -0.0002 | 0.0129 | 0.8812 | 0.0792 | 0.0038 |
| black | -0.0032 | 0.0140 | 0.1106 | 0.0099 | 0.0593 |

| | PBR | | | | |
|---|---|---|---|---|---|
| management | 0.0410 | | | | |
| R&D | 0.0328 | | | | |
| patent 1 | 0.0242 | | | | |
| black | 0.5685 | | | | |

According to the above,
(1) Indexes with large weighting for calculating the business strategy evaluated value (management) are as follows:

"facility investment efficiency" which is 0.6796,
"ROA$\alpha$" which is 0.1260, and
"PBR" which is 0.0410.

Further, an index in which the weighting is a large negative value of an absolute value is as follows:

"cost to sales ratio" which is -0.0370.

(2) Indexes with large weighting for calculating the R&D strategy evaluated value (R&D) are as follows:

"R&D cost ratio β" which is 0.3023,
"R&D cost per inventor" which is 0.1820, and
"number of claims per inventor" which is 0.1381.

Further, an index in which the weighting is a large negative value of an absolute value is as follows:

"patent application productivity" which is -0.2424.

(3) Indexes with large weighting for calculating the intellectual property strategy evaluated value (patent 1) are as follows:

"number of claims per inventor" which is 0.8812,
"number of claims per application" which is 0.0792, and
"patent application productivity" which is 0.0402.

(4) Indexes with large weighting for calculating the company evaluated value (black) are as follows:

"PBR" which is 0.5685,
"number of claims per inventor" which is 0.1106, and
"total factor productivity" which is 0.0811.

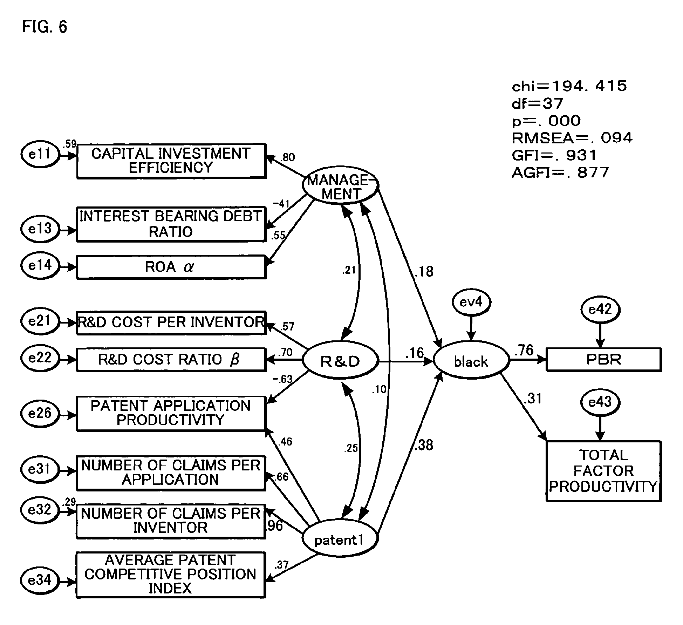

<4-4. Example of FIG. 6>

<4-4-1. Explanation of Path Diagram>

As evident from FIG. 6, in this causal model, with respect to the influences (contribution ratios) of the other 3 evaluated values on the company evaluated value (black), the business strategy evaluated value (management) was approximately 18%, the R&D strategy evaluated value (R&D) was approximately 16%, and the intellectual property strategy evaluated value (patent 1) was 38%.
Further, when viewing the mutual correlation coefficients of the 3 evaluated values, correlation between "management" and "patent 1" was 0.10, correlation between "patent 1" and "R&D" was 0.25, and correlation between "R&D" and "management" was 0.21, and they respectively shown a weak correlation.
In the example of FIG. 6, similar to FIG. 5, MVA was not used as the index that will be influenced by the company evaluated value (black). Thereby, fluctuation of the company evaluated value caused by the business size can be reduced.
Further, indexes that are influenced by the other 3 evaluated values that are slightly different from those in FIG. 5 were used, and comparatively high adaptation was obtained.
Specifically, the three indexes of "facility investment efficiency," "interest bearing debt ratio" and "ROA$\alpha$" were selected as the indexed that are influenced by the business strategy evaluated value (management).
Subsequently, the three indexes of "R&D cost ratio $\beta$," "R&D cost per inventor" and "patent application productivity" were selected as the indexed that are influenced by the R&D strategy evaluated value (R&D).
Finally, the four indexes of "number of claims per application," "number of claims per inventor," "average patent competitive position index" and "patent application productivity" were selected as the indexes that are influenced by the intellectual property strategy evaluated value (patent 1).
The definition and calculation formula of the respective indexes are as shown in [Table 1] to [Table 6].
According to the combinations of indexes shown in FIG. 6, based on the chi-squared test, $\chi^2$ = 194.415 (degree of freedom df = 37, p value = 0.000). Further, RMSEA (Root Mean Square Error of Approximation) = 0.094, GFI = 0.931, AGFI = 0.877.

<4-4-2. Weighting>

Further, the weighting (component of matrix Y) to be applied to the respective indexes for calculating the respective evaluated values at evaluated value calculation step S6 is as follows in the example of FIG. 6. The digit of $10^{-5}$ was rounded off.

[Table 9]

| | Total factor productivity | Average patent competitive position index | Patent application productivity | R&D cost ratio $\beta$ | ROA $\alpha$ |
|---|---|---|---|---|---|
| management | 0.0073 | 0.0003 | -0.0147 | 0.0181 | 0.1779 |
| R&D | 0.0069 | 0.0049 | -0.2431 | 0.2988 | 0.0089 |
| patent1 | 0.0051 | 0.0312 | 0.0437 | 0.0233 | 0.0008 |
| black | 0.0955 | 0.0047 | -0.0158 | 0.0300 | 0.0154 |

| | Interest bearing debt ratio | R&D cost per inventor | Number of claims per inventor | Number of claims per application | Facility investment efficiency |
|---|---|---|---|---|---|
| management | -0.1129 | 0.0111 | 0.0097 | 0.0010 | 0.5209 |

(continued)

|  | Interest bearing debt ratio | R&D cost per inventor | Number of claims per inventor | Number of claims per application | Facility investment efficiency |
|---|---|---|---|---|---|
| R&D | -0.0056 | 0.1823 | 0.1375 | 0.0136 | 0.0260 |
| patent 1 | -0.0005 | 0.0142 | 0.8702 | 0.0863 | 0.0023 |
| black | -0.0098 | 0.0183 | 0.1320 | 0.0131 | 0.0451 |
|  |  |  |  |  |  |
|  | PBR |  |  |  |  |
| management | 0.0371 |  |  |  |  |
| R&D | 0.0353 |  |  |  |  |
| patent1 | 0.0263 |  |  |  |  |
| black | 0.4880 |  |  |  |  |

According to the above,
(1) Indexes with large weighting for calculating the business strategy evaluated value (management) are as follows:

"facility investment efficiency" which is 0.5209,
"ROA$\alpha$" which is 0.1779, and
"PBR" which is 0.0371.

Further, an index in which the weighting is a large negative value of an absolute value is as follows:

"interest bearing debt ratio" which is -0.1129.

(2) Indexes with large weighting for calculating the R&D strategy evaluated value (R&D) are as follows:

"R&D cost ratio $\beta$" which is 0.2988,
"R&D cost per inventor" which is 0.1823, and
"number of claims per inventor" which is 0.1375.

Further, an index in which the weighting is a large negative value of an absolute value is as follows:

"patent application productivity" which is -0.2431.

(3) Indexes with large weighting for calculating the intellectual property strategy evaluated value (patent 1) are as follows:

"number of claims per inventor" which is 0.8702, "number of claims per application" which is 0.0863, and
"patent application productivity" which is 0.0437.

(4) Indexes with large weighting for calculating the company evaluated value (black) are as follows:

"PBR" which is 0.4880,
"number of claims per inventor" which is 0.1320, and
"total factor productivity" which is 0.0955.

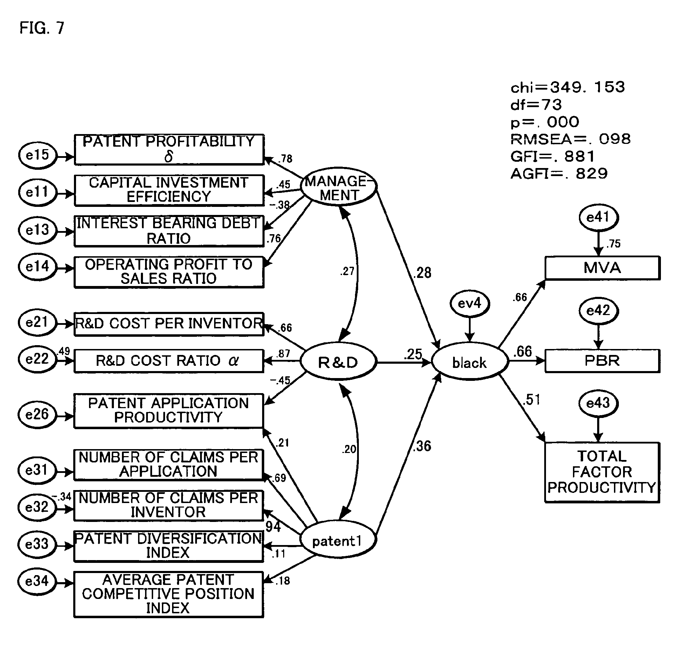

<4-5. Example of FIG. 7>

<4-5-1. Explanation of Path Diagram>

As evident from FIG. 7, in this causal model, with respect to the influences (contribution ratios) of the other 3 evaluated values on the company evaluated value (black), the business strategy evaluated value (management) was approximately 28%, the R&D strategy evaluated value (R&D) was approximately 25%, and the intellectual property strategy evaluated value (patent 1) was 36%.

Further, when viewing the mutual correlation coefficients of the 3 evaluated values, correlation between "patent 1" and "R&D" was 0.20, and correlation between "R&D" and "management" was 0.27, and they respectively shown a weak correlation.

In the example of FIG. 7, similar to FIG. 4, MVA was used as the index that will be influenced by the company evaluated value (black).

Further, indexes that are influenced by the other 3 evaluated values that are slightly different from those in FIG. 4 were used, and comparatively high adaptation was obtained.

Specifically, the four indexes of "patent profitability $\delta$," "facility investment efficiency," "interest bearing debt ratio" and "operating profit to sales ratio" were selected as the indexed that are influenced by the business strategy evaluated value (management).

Subsequently, the three indexes of "R&D cost ratio $\alpha$," "R&D cost per inventor" and "patent application productivity" were selected as the indexed that are influenced by the R&D strategy evaluated value (R&D).

Finally, the five indexes of "number of claims per application," "number of claims per inventor," "patent diversification index," "average patent competitive position index" and "patent application productivity" were selected as the indexes that are influenced by the intellectual property strategy evaluated value (patent 1).

The definition and calculation formula of the respective indexes are as shown in [Table 1] to [Table 6].

According to the combinations of indexes shown in FIG. 7, based on the chi-squared test, $\chi^2 = 349.153$ (degree of freedom df = 73, p value = 0.000). Further, RMSEA (Root Mean Square Error of Approximation) = 0.098, GFI = 0.881, AGFI = 0.829.

<4-5-2. Weighting>

Further, the weighting (component of matrix Y) to be applied to the respective indexes for calculating the respective evaluated values at evaluated value calculation step S6 is as follows in the example of FIG. 7. The digit of $10^{-5}$ was rounded off.

[Table 10]

| | Patent profitability δ | Total factor productivity | Average patent competitive position index | Patent diversification index | Patent application productivity |
|---|---|---|---|---|---|
| management | 0.3399 | 0.0121 | -0.0004 | -0.0003 | -0.005 |
| R&D | 0.0176 | 0.0111 | 0.0008 | 0.0005 | -0.0925 |
| patent1 | -0.0061 | 0.0092 | 0.0193 | 0.0114 | 0.0246 |
| black | 0.0355 | 0.1045 | 0.0019 | 0.0011 | -0.0054 |

| | R&D cost ratio α | Operating profit to sales ratio | MVA | Interest bearing debt ratio | R&D cost per inventor |
|---|---|---|---|---|---|
| management | 0.0277 | 0.2999 | 0.0271 | -0.0751 | 0.0088 |
| R&D | 0.5918 | 0.0155 | 0.0249 | -0.0039 | 0.1878 |
| patent 1 | 0.0187 | -0.0054 | 0.0206 | 0.0013 | 0.0059 |
| black | 0.0515 | 0.0313 | 0.2339 | -0.0078 | 0.0163 |

| | Number of claims per inventor | Number of claims per application | Facility investment efficiency | PBR | |
|---|---|---|---|---|---|
| management | -0.0188 | -0.003 | 0.0955 | 0.0268 | |
| R&D | 0.0365 | 0.0059 | 0.0049 | 0.0246 | |
| patent1 | 0.8357 | 0.1354 | -0.0017 | 0.0203 | |
| black | 0.0835 | 0.0135 | 0.01 | 0.2307 | |

According to the above,
(1) Indexes with large weighting for calculating the business strategy evaluated value (management) are as follows:

"patent profitability δ" which is 0.3399,
"operating profit to sales ratio" which is 0.2999, "facility investment efficiency" which is 0.0955,
"R&D cost ratio α" which is 0.0277,
"MVA" which is 0.0271, and
"PBR" which is 0.0268.

Further, an index in which the weighting is a large negative value of an absolute value is as follows:

"interest bearing debt ratio" which is -0.0751.

(2) Indexes with large weighting for calculating the R&D strategy evaluated value (R&D) are as follows:

"R&D cost ratio α" which is 0.5918,
"R&D cost per inventor" which is 0.1878, and
"number of claims per inventor" which is 0.0365.

Further, an index in which the weighting is a large negative value of an absolute value is as follows:

"patent application productivity" which is -0.0925.

(3) Indexes with large weighting for calculating the intellectual property strategy evaluated value (patent 1) are as follows:

"number of claims per inventor" which is 0.8357, "number of claims per application" which is 0.1354, and "patent application productivity" which is 0.0246.

(4) Indexes with large weighting for calculating the company evaluated value (black) are as follows:

"MVA" which is 0.2339,
"PBR" which is 0.2307,
"number of claims per inventor" which is 0.1045, and
"total factor productivity" which is 0.0835.

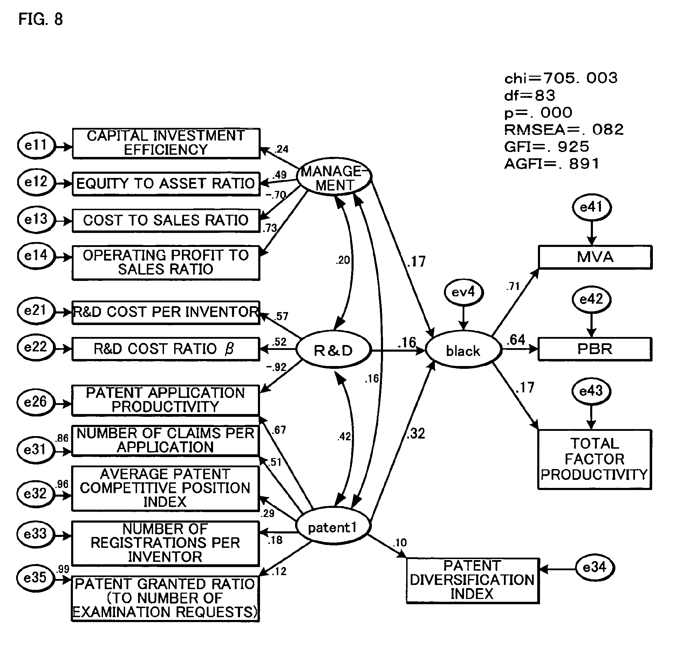

<4-6. Example of FIG. 8>

<4-6-1. Explanation of Path Diagram>

As evident from FIG. 8, in this causal model, with respect to the influences (contribution ratios) of the other 3 evaluated values on the company evaluated value (black), the business strategy evaluated value (management) was approximately 17%, the R&D strategy evaluated value (R&D) was approximately 16%, and the intellectual property strategy evaluated value (patent 1) was 32%.
Further, when viewing the mutual correlation coefficients of the 3 evaluated values, correlation between "management" and "patent 1" was 0.16, correlation between "patent 1" and "R&D" was 0.42, and correlation between "R&D" and "management" was 0.20, and they respectively shown a weak correlation.
In the example of FIG. 8, similar to FIG. 4, MVA was used as the index that will be influenced by the company evaluated value (black).
Further, indexes that are influenced by the other 3 evaluated values that are slightly different from those in FIG. 4 were used, and comparatively high adaptation was obtained.
Specifically, the four indexes of "facility investment efficiency," "equity to asset ratio," "cost to sales ratio" and "operating profit to sales ratio" were selected as the indexed that are influenced by the business strategy evaluated value (management).
Subsequently, the three indexes of "R&D cost ratio $\beta$," "R&D cost per inventor" and "patent application productivity" were selected as the indexed that are influenced by the R&D strategy evaluated value (R&D).
Finally, the six indexes of "number of claims per application," "number of registrations per inventor," "patent diversification index," "average patent competitive position index," "patent granted ratio (to number of examination requests)" and "patent application productivity" were selected as the indexes that are influenced by the intellectual property strategy evaluated value (patent 1).
The definition and calculation formula of the respective indexes are as shown in [Table 1] to [Table 6].
According to the combinations of indexes shown in FIG. 8, based on the chi-squared test, $\chi^2$ = 705.003 (degree of freedom df = 83, p value = 0.000). Further, RMSEA (Root Mean Square Error of Approximation) = 0.082, GFI = 0.925, AGFI = 0.891.

<4-6-2. Weighting>

Further, the weighting (component of matrix Y) to be applied to the respective indexes for calculating the respective evaluated values at evaluated value calculation step S6 is as follows in the example of FIG. 8. The digit of $10^{-5}$ was rounded off.

[Table 11]

| | Patent diversification index | Cost to sales ratio | Number of registrations per inventor | Average patent competitive position index | Patent granted ratio (to number of examination requests) |
|---|---|---|---|---|---|
| management | 0.002 | -0.3967 | 0.0036 | 0.0061 | 0.0023 |
| R&D | 0.0275 | -0.0242 | 0.0505 | 0.0852 | 0.0321 |
| patent1 | 0.0505 | -0.0268 | 0.0927 | 0.1564 | 0.059 |
| black | 0.0062 | -0.0243 | 0.0114 | 0.0192 | 0.0073 |
| | | | | | |

(continued)

|  | Total factor productivity | Patent application | R&D cost ratio β | Operating profit to sales ratio | MVA |
|---|---|---|---|---|---|
| management | 0.0043 | -0.0133 | 0.0122 | 0.4391 | 0.0352 |
| R&D | 0.0103 | -0.5011 | 0.2245 | 0.0267 | 0.0843 |
| patent1 | 0.015 | 0.372 | 0.1882 | 0.0296 | 0.122 |
| black | 0.0428 | 0.0099 | 0.0294 | 0.0269 | 0.349 |

|  | R&D cost per inventor | Number of claims per application | Facility investment efficiency | Equity to asset ratio | PBR |
|---|---|---|---|---|---|
| management | 0.0148 | 0.0131 | 0.0727 | 0.1846 | 0.0273 |
| R&D | 0.2723 | 0.1832 | 0.0044 | 0.0112 | 0.0653 |
| patent1 | 0.2283 | 0.3364 | 0.0049 | 0.0125 | 0.0945 |
| black | 0.0356 | 0.0414 | 0.0045 | 0.0113 | 0.2703 |

According to the above,
(1) Indexes with large weighting for calculating the business strategy evaluated value (management) are as follows:

"operating profit to sales ratio" which is 0.4391, "equity to asset ratio" which is 0.1846,
"facility investment efficiency" which is 0.0727,
"MVA" which is 0.0352, and
"PBR" which is 0.0273.

Further, an index in which the weighting is a large negative value of an absolute value is as follows:

"cost to sales ratio" which is -0.3967.

(2) Indexes with large weighting for calculating the R&D strategy evaluated value (R&D) are as follows:

"R&D cost per inventor" which is 0.2723,
"R&D cost ratio β" which is 0.2245, and
"number of claims per application" which is 0.1832.

Further, an index in which the weighting is a large negative value of an absolute value is as follows:

"patent application productivity" which is -0.5011.

(3) Indexes with large weighting for calculating the intellectual property strategy evaluated value (patent 1) are as follows:

"patent application productivity" which is 0.3720, "number of claims per application" which is 0.3364, and
"R&D cost per inventor" which is 0.2283.

(4) Indexes with large weighting for calculating the company evaluated value (black) are as follows:

"MVA" which is 0.3490,
"PBR" which is 0.2703, and
"total factor productivity" which is 0.0428.

<4-7. Summary of [Table 7] to [Table 9]>

The weighting ([Table 7] to [Table 9]) to be applied to the respective indexes for calculating the respective evaluated values in the examples of FIG. 4 to FIG. 6 can be summarized as follows.

<4-7-1. Calculation of Business Strategy Evaluated Value>

In the calculation of the business strategy evaluated value (management), the following indexes are emphasized:

"facility investment efficiency" in which the weighting is preferably 0.06 or more and 0.70 or less,
"operating profit to sales ratio" or "ROA$\alpha$" in which the weighting is preferably 0.12 or more and 0.65 or less, and
"PBR" in which the weighting is preferably 0.03 or more and 0.05 or less.

Further, the following index may be emphasized:

"equity to asset ratio" in which the weighting is preferably 0.10 or more and 0.15 or less.
Moreover, the lowness of the following indexes may be emphasized;
"cost to sales ratio" in which the weighting is preferably -0.30 or more and -0.03 or less, and
"interest bearing debt ratio" in which the weighting is preferably -0.15 or more and -0.10 or less.

Incidentally, the "facility investment efficiency" may be replaced with "labor productivity." This is because "facility investment efficiency" = value added amount/tangible fixed assets and "labor productivity" = value added amount/number of employees, and these show mutually similar tendencies.
Further, the "operating profit to sales ratio" = operating profit/sales volume, and this may be replaced with "gross operating profit to sales ratio," "value added amount to sales ratio" or the like. Moreover, the "ROA$\alpha$" = {value added amount + royalty income such as patent fees}/total assets, and "ROA$\alpha$" may be replaced with "ROA$\beta$" or "ROA$\delta$" by substituting the portion of the value added amount with gross operating profit, operating profit or the like. The "operating profit to sales ratio" and its substitute index and the "ROA$\alpha$" and its substitute index show mutually similar tendencies, and either index may be selected.
Further, the "equity to asset ratio" or the "interest bearing debt ratio" may also be mutually replaced by inverting the positive and negative of weighting. This is because "equity to asset ratio" = equity capital/total assets and "interest bearing debt ratio" = interest bearing debt/total assets, and these show mutually inverse correlations.
Further, the "cost to sales ratio" may be replaced with "cost of sales-and-administration ratio to sales" or "labor distribution share" because these show mutually similar tendencies.

<4-7-2. Calculation of R&D Strategy Evaluated Value>

In the calculation of the R&D strategy evaluated value (R&D), the following indexes are emphasized:

"R&D cost ratio $\alpha$" or "R&D cost ratio $\beta$" in which the weighting is preferably 0.20 or more and 0.35 or less, and
"R&D cost per inventor" in which the weighting is preferably 0.15 or more and 0.25 or less.

Further, it is more desirable to emphasize the lowness of the following index:

"patent application productivity" in which the weighting is preferably -0.30 or more and -0.20 or less.

Incidentally, the "R&D cost ratio $\alpha$" = R&D cost/sales volume and the "R&D cost ratio $\beta$" = R&D cost/value added amount, and either index may be selected. Moreover, since these show similar tendencies as "R&D cost ratio $\gamma$" = R&D cost/gross operating profit and "R&D cost ratio $\delta$" = R&D cost/total assets, the two former indexes may be replaced with the two latter indexes.
Further, the "R&D cost per inventor" may be replaced with "R&D cost per employee" = R&D cost/number of employees.
Further, the "number of claims per inventor" may be replaced with "number of applications per inventor" = number of patent applications/number of inventors or "number of registrations per inventor" = number of patent registrations/number of inventors.
Further, the "patent application productivity" = number of claims filed/R&D cost may be replaced with "examination request productivity" = patent application productivity $\times$ estimated examination request ratio or "patent registration productivity" = patent application productivity $\times$ estimated registration ratio.

<4-7-3. Calculation of Intellectual Property Strategy Evaluated Value>

In the calculation of the intellectual property strategy evaluated value (patent 1), the following indexes are emphasized:

"number of claims per inventor" in which the weighting is preferably 0.75 or more and 0.90 or less,
"number of claims per application" in which the weighting is preferably 0.06 or more and 0.15 or less, and
"patent application productivity" in which the weighting is preferably 0.03 or more and 0.07 or less.

Incidentally, the "number of claims per application" may be replaced with "number of claims per registration" = number of registered claims/number of patent registrations.
Further, the "number of claims per inventor" may be replaced with "number of applications per inventor" = number of patent applications/number of inventors or "number of registrations per inventor" = number of patent registrations/number of inventors as described above.
Further, the "patent application productivity" = number of claims filed/R&D cost may be replaced with "examination request productivity" = patent application productivity × estimated examination request ratio or "patent registration productivity" = patent application productivity × estimated registration ratio as described above.

<4-7-4. Calculation of Company Evaluated Value>

In the calculation of the company evaluated value (black), the following indexes are emphasized:

"PBR" in which the weighting is preferably 0.25 or more and 0.60 or less,
"number of claims per inventor" in which the weighting is preferably 0.10 or more and 0.15 or less, and
"total factor productivity" in which the weighting is preferably 0.04 or more and 0.10 or less.

Further, the following indexes may be emphasized:

"MVA" in which the weighting is preferably 0.30 or more and 0.35 or less.

Incidentally, the "MVA" may be replaced with "expected intellectual property profit."
Further, the "number of claims per inventor" may be replaced with "number of applications per inventor" = number of patent applications/number of inventors or "number of registrations per inventor" = number of patent registrations/number of inventors as described above.

<4-8. Summary of [Table 7] to [Table 11]>

The weighting ([Table 7] to [Table 11]) to be applied to the respective indexes for calculating the respective evaluated values in the examples of FIG. 4 to FIG. 8 can be summarized as follows.

<4-8-1. Calculation of Business Strategy Evaluated Value>

In the calculation of the business strategy evaluated value (management), the following indexes are emphasized:

"facility investment efficiency" in which the weighting is preferably 0.06 or more and 0.70 or less,
"operating profit to sales ratio" or "ROA$\alpha$" in which the weighting is preferably 0.12 or more and 0.65 or less, and
"PBR" in which the weighting is preferably 0.02 or more and 0.05 or less.

Further, the following index may be emphasized:

"equity to asset ratio" in which the weighting is preferably 0.10 or more and 0.20 or less.
Moreover, the lowness of the following indexes may be emphasized;
"cost to sales ratio" in which the weighting is preferably -0.40 or more and -0.03 or less, and
"interest bearing debt ratio" in which the weighting is preferably -0.15 or more and -0.06 or less.

Incidentally, the "facility investment efficiency" may be replaced with "labor productivity." This is because "facility investment efficiency" = value added amount/tangible fixed assets and "labor productivity" = value added amount/number of employees, and these show mutually similar tendencies.

Further, the "operating profit to sales ratio" = operating profit/sales volume, and this may be replaced with "gross operating profit to sales ratio," "value added amount to sales ratio" or the like. Moreover, the "ROA$\alpha$" = {value added amount + royalty income such as patent fees}/total assets, and "ROA$\alpha$" may be replaced with "ROA$\beta$" or "ROA$\delta$" by substituting the portion of the value added amount with gross operating profit, operating profit or the like. The "operating profit to sales ratio" and its substitute index and the "ROA$\alpha$" and its substitute index show mutually similar tendencies, and either index may be selected.

Further, the "equity to asset ratio" or the "interest bearing debt ratio" may also be mutually replaced by inverting the positive and negative of weighting. This is because "equity to asset ratio" = equity capital/total assets and "interest bearing debt ratio" = interest bearing debt/total assets, and these show mutually inverse correlations.

Further, the "cost to sales ratio" may be replaced with "cost of sales-and-administration ratio to sales" or "labor distribution share" because these show mutually similar tendencies.

<4-8-2. Calculation of R&D Strategy Evaluated Value>

In the calculation of the R&D strategy evaluated value (R&D), the following indexes are emphasized:

"R&D cost ratio $\alpha$" or "R&D cost ratio $\beta$" in which the weighting is preferably 0.20 or more and 0.70 or less, and "R&D cost per inventor" in which the weighting is preferably 0.15 or more and 0.30 or less.

Further, it is more desirable to emphasize the lowness of the following index:

"patent application productivity" in which the weighting is preferably -0.60 or more and -0.08 or less.
Further, the following index may also be emphasized.
"number of claims per inventor" in which the weighting is preferably 0.03 or more and 0.15 or less.

Incidentally, the "R&D cost ratio $\alpha$" = R&D cost/sales volume and the "R&D cost ratio $\beta$" = R&D cost/value added amount, and either index may be selected. Moreover, since these show similar tendencies as "R&D cost ratio $\gamma$" = R&D cost/gross operating profit and "R&D cost ratio $\delta$" = R&D cost/total assets, the two former indexes may be replaced with the two latter indexes.

Further, the "R&D cost per inventor" may be replaced with "R&D cost per employee" = R&D cost/number of employees. Further, the "number of claims per inventor" may be replaced with "number of applications per inventor" = number of patent applications/number of inventors or "number of registrations per inventor" = number of patent registrations/number of inventors.

Further, the "patent application productivity" = number of claims filed/R&D cost may be replaced with "examination request productivity" = patent application productivity $\times$ estimated examination request ratio or "patent registration productivity" = patent application productivity $\times$ estimated registration ratio.

<4-8-3. Calculation of Intellectual Property Strategy Evaluated Value>

In the calculation of the intellectual property strategy evaluated value (patent 1), the following indexes are emphasized:

"number of claims per application" in which the weighting is preferably 0.06 or more and 0.40 or less, and "patent application productivity" in which the weighting is preferably 0.02 or more and 0.40 or less.

Further, the following index may also be emphasized:

"number of claims per inventor" in which the weighting is preferably 0.75 or more and 0.90 or less.

Incidentally, the "number of claims per application" may be replaced with "number of claims per registration" = number of registered claims/number of patent registrations.

Further, the "number of claims per inventor" may be replaced with "number of applications per inventor" = number of patent applications/number of inventors or "number of registrations per inventor" = number of patent registrations/number of inventors as described above.

Further, the "patent application productivity" = number of claims filed/R&D cost may be replaced with "examination request productivity" = patent application productivity $\times$ estimated examination request ratio or "patent registration productivity" = patent application productivity $\times$ estimated registration ratio as described above.

<4-8-4. Calculation of Company Evaluated Value>

In the calculation of the company evaluated value (black), the following indexes are emphasized:

"PBR" in which the weighting is preferably 0.20 or more and 0.60 or less, and
"total factor productivity" in which the weighting is preferably 0.04 or more and 0.15 or less.

Further, the following indexes may be emphasized:

"MVA" in which the weighting is preferably 0.20 or more and 0.40 or less, and
"number of claims per inventor" in which the weighting is preferably 0.07 or more and 0.15 or less.

Incidentally, the "MVA" may be replaced with "expected intellectual property profit."
Further, the "number of claims per inventor" may be replaced with "number of applications per inventor" = number of patent applications/number of inventors or "number of registrations per inventor" = number of patent registrations/number of inventors as described above.

<4-9. Ranking Example>

Here, the result of calculating the evaluated value with the company evaluation assisting device and outputting the ranking is explained.
Foremost, the company evaluated value ranking is indicated in [Table 12], and the ranking based on the respective indexes is indicated in [Table 13] as a reference and explained.

[Table 12]

| Intellectual Property Strategic Company Intellectual Property Strategic Management Company Ranking and List of Company Score by Factor | | | | |
|---|---|---|---|---|
| Rank | Company Name | Management | R&D | Patent |
| 1 | SHC | 63 | 67 | 61 |
| 2 | SON | 46 | 87 | 82 |
| 3 | TOY | 71 | 86 | 64 |
| 4 | TAP | 67 | 63 | 88 |
| 5 | KAO | 71 | 75 | 52 |
| 6 | CAN | 62 | 95 | 78 |
| 7 | KEY | 100 | 69 | 67 |
| 8 | HDM | 64 | 100 | 49 |
| 9 | ROH | 59 | 67 | 55 |
| 10 | TOE | 66 | 76 | 72 |
| 11 | ADV | 44 | 56 | 67 |
| 12 | NIM | 43 | 80 | 66 |
| 13 | MUM | 53 | 57 | 55 |
| 14 | SUC | 46 | 60 | 65 |
| 15 | UNC | 59 | 56 | 72 |
| 16 | HOY | 62 | 60 | 52 |
| 17 | FNE | 53 | 65 | 57 |
| 18 | NID | 67 | 66 | 100 |
| 19 | JSR | 48 | 52 | 56 |
| 20 | CIE | 77 | 67 | 51 |

[Table 13]

| Intellectual Property Strategic Company<br>Company Ranking of Each External Valuation Index | | | |
|---|---|---|---|
| Rank | MVA | PBR | Total Factor Productivity |
| 1 | SON | NOK | ADV |
| 2 | SHC | CIE | MOJ |
| 3 | TOY | NID | JSR |
| 4 | KAO | FNE | MBM |
| 5 | TAP | SHC | OMR |
| 6 | CAN | HOY | SHI |
| 7 | ROH | KAO | NIN |
| 8 | MUM | ARM | UNI |
| 9 | HDM | TOE | ASK |
| 10 | HIT | KEN | NDM |
| 11 | SUC | UNC | TIM |
| 12 | TOE | HDM | ISM |
| 13 | NIM | JSR | SEC |
| 14 | SHA | KEY | NSB |
| 15 | FAN | YAS | PEN |
| 16 | KEY | SUC | KIS |
| 17 | TOS | TAP | HIN |
| 18 | MBC | HIC | TRM |
| 19 | MBE | TDK | FUJ |
| 20 | RIC | ADV | ZEO |

<4-9-1. Company Evaluated Value Ranking>

[Table 12] shows the ranking of the top 20 companies of the company evaluated value (black) sought as the latent variable $f_4$ using the causal model of FIG. 4. In addition, the 3 evaluated values of business strategy evaluated value (management), R&D strategy evaluated value (R&D) and intellectual property strategy evaluated value (patent 1) sought as the latent variables $f_1$ to $f_3$ are also shown regarding these 20 companies. With these 3 evaluated values, the deviation score was calculated and converted so that the average value will be 50 points and the highest point will be 100 points.

For reference, [Table 13] shows the respective top 20 companies of the 3 indexes of "MVA," "PBR" and "total factor productivity" selected as indexes that are influenced by the company evaluated value (black).

As shown in [Table 12], according to the foregoing company evaluation assisting device, the business strategy evaluated value, the R&D strategy evaluated value, the intellectual property strategy evaluated value and the company evaluated value, which are abstract concepts that cannot be directly measured, can all be quantified. Accordingly, the comprehensive evaluation or evaluation from a specific viewpoint of each company can be performed quantitatively. As shown in [Table 14] to [Table 16], ranking can be provided for the respective values of business strategy evaluated value, R&D strategy evaluated value, and intellectual property strategy evaluated value.

Further, as evident from [Table 12] and [Table 13], although many of the top companies of the 3 indexes of [Table 13] are also ranked as the top companies of the company evaluated value (black) in [Table 12], the ranking does not coincide completely. As a result of performing evaluation based on the company evaluated value (black) as shown in [Table 12], a more comprehensive evaluation is enabled, and this can be utilized in making investment decisions.

Subsequently, the business strategy evaluated value ranking is indicated in [Table 14] and explained.

[Table 14]

| Intellectual Property Strategic Company<br>Company Ranking of "Management" Factor and Company Ranking of Each "Management" Factor Constituent Index | | | | |
|---|---|---|---|---|
| Company Ranking of "Management" Factor | | Facility investment efficiency | Equity to Asset Ratio | Cost-to-Sales Ratio 10 (Ascending Order) | Profit Operating Profit Ratio (To Sales) |
| 1 | SHC | MEG | SHI | KEY | KEY |
| 2 | SON | NGK | NKC | JDL | FAN |
| 3 | TOY | MYS | NCS | NOE | COS |
| 4 | TAP | TAP | MAM | SUN | TOY |
| 5 | KAO | HCI | NGK | HDM | NAN |
| 6 | CAN | CEM | FJF | KAO | TER |
| 7 | KEY | OMR | FAN | MAN | USH |
| 8 | HDM | UNC | KEY | SYS | JDL |
| 9 | ROH | SWC | GEC | SIS | MAI |
| 10 | TOE | KEY | MAN | TOA | ONP |
| 11 | ADV | NEI | JDL | LIO | HIE |
| 12 | NIM | TOP | FTC | MIY | HOY |
| 13 | MUM | ISC | ENP | TER | KAO |
| 14 | SUC | FUE | NIC | MOR | TAP |
| 15 | UNC | NIK | TIM | ONP | MAN |
| 16 | HOY | AIK | GOC | HMP | NIM |
| 17 | FNE | RIC | MAR | NAN | NIK |
| 18 | NID | FUM | HRE | SHI | THC |
| 19 | JSR | KOM | ICI | DIC | ARM |
| 20 | CIE | TOY | ICO | FAN | SHI |

<4-9-2. Business Strategy Evaluated Value Ranking>

[Table 14] shows the ranking of the top 20 companies of the business strategy evaluated value (management) sought as the latent variable $f_1$ using the causal model of FIG. 4. In addition, for reference, the respective top 20 companies of the 4 indexes of "facility investment efficiency," "equity to asset ratio," "cost to sales ratio," and "operating profit to sales ratio" selected as the indexes that are influenced by the business strategy evaluated value (management) are shown. Incidentally, "cost to sales ratio" is indicated as the top 20 companies in ascending order.
As evident from [Table 14], although many of the top companies of the 4 indexes are also ranked as the top companies of the business strategy evaluated value (management), the ranking does not coincide completely. As a result of performing evaluation based on the business strategy evaluated value (management), a more comprehensive evaluation regarding the business strategy is enabled, and this can be utilized in making investment decisions.
Subsequently, the R&D strategy evaluated value ranking is shown in [Table 15] and explained.

[Table 15]

| Intellectual Property Strategic Company | | | |
| Company Ranking of "R&D" Factor and Company Ranking of Each "R&D" Factor Constituent Index | | | |
| Company Ranking of "R&D" Factor | R&D Cost per Inventor | R&D Cost Ratio $\alpha$ | Patent Application Productivity |
|---|---|---|---|
| 1 | SHC | ICI | ADV | TIE |
| 2 | SON | FUE | HDM | MTC |
| 3 | TOY | TES | SEP | DNP |
| 4 | TAP | FCJ | HAP | RIE |
| 5 | KAO | MAM | DEN | HOP |
| 6 | CAN | UNI | SON | SEC |
| 7 | KEY | NCC | HEE | CLA |
| 8 | HDM | ISM | NIN | ZOC |
| 9 | ROH | TOY | NSH | KEN |
| 10 | TOE | ONP | CAN | KEW |
| 11 | ADV | OMR | ICI | TKO |
| 12 | NIM | NAT | FJK | NIF |
| 13 | MUM | ISS | HIK | KYP |
| 14 | SUC | VES | NKY | SHD |
| 15 | UNC | TPI | NGK | ROP |
| 16 | HOY | FUP | TOK | NIY |
| 17 | FUE | NIS | ALO | TRM |
| 18 | NID | JDR | SYS | MAR |
| 19 | JSR | KEI | NAT | SUB |
| 20 | CIE | FAN | ISM | SCE |

<4-9-3. R&D Strategy Evaluated Value Ranking>

[Table 15] shows the ranking of the top 20 companies of the R&D strategy evaluated value (R&D) sought as the latent variable $f_2$ using the causal model of FIG. 4. In addition, for reference, the respective top 20 companies of the 3 indexes of "R&D cost ratio $\alpha$," "R&D cost per inventor," and "patent application productivity" selected as the indexes that are influenced by the R&D strategy evaluated value (R&D) are shown.

As evident from [Table 15], although many of the top companies of the 3 indexes are also ranked as the top companies of the R&D strategy evaluated value (R&D), the ranking does not coincide completely. As a result of performing evaluation based on the R&D strategy evaluated value (R&D), a more comprehensive evaluation regarding the R&D strategy is enabled, and this can be utilized in making investment decisions.

Subsequently, the intellectual property strategy evaluated value ranking is shown in [Table 16] and explained.

EP 1 870 844 A1

[Table 16]

| Intellectual Property Strategic Company | | | | | | | | |
|---|---|---|---|---|---|---|---|---|
| Company Ranking of "Patent" Factor and Company Ranking of Each "Patent" Factor Constituent Index | | | | | | | | |
| Company Ranking of "Patent" Factor | | Number of Claims per Application | Number of Claims per Inventor (Patent Application) | Patent Diversification Index | Average Patent Competitive Position Index | Check Patent Desire Index | Check Power Against Other Company Index | Total Share of Effective Patents |
| 1 | SHC | SHD | SHI | FUP | SHI | YAE | DIA | NEC |
| 2 | SON | CHE | TAP | SIO | HIK | NEC | NIT | MBE |
| 3 | TOY | TAP | SON | HDM | ARM | FJA | YAE | HIT |
| 4 | TAP | SON | MEG | MAE | TOC | DIE | FJA | HOR |
| 5 | KAO | NEC | DCI | MEI | KAO | KOD | NEI | NIE |
| 6 | CAN | CAN | SHD | AIS | TOS | MBM | NKD | SON |
| 7 | KEY | NEO | CAN | DEN | MAE | NIT | EBD | YAE |
| 8 | HDM | TOE | IBI | SUZ | ZOC | NKD | CLA | CLA |
| 9 | ROH | SHI | FJG | YAM | SUB | NEI | STE | YOE |
| 10 | TOE | UNI | CAC | OMR | OVC | YOE | NJR | NIT |
| 11 | ADV | JDL | UNC | MAE | HIT | EBD | KOD | KOD |
| 12 | NIM | NKD | NEC | SIT | NKY | STE | DIE | STE |
| 13 | MUM | NIM | SUB | FJF | SAN | NIE | NIE | NJR |
| 14 | SUC | MAZ | NIY | MBE | MBE | NET | YOE | DIA |
| 15 | UNC | ADV | NKY | FHI | KAN | MAE | HOR | FJG |
| 16 | HOY | NIG | NIM | SAN | NSR | HOR | FJG | NET |
| 17 | FNE | MAC | KAN | DAI | KEY | HIT | NET | MBM |
| 18 | NID | MEG | NEO | KOP | DNP | DIA | NEC | EBD |
| 19 | JSR | PIO | MBC | KIP | SHC | FJG | HIT | NEI |
| 20 | CIE | DCI | RIC | KEY | CHC | CLA | SON | FJA |

<4-9-4. Intellectual Property Strategy Evaluated Value Ranking>

[Table 16] shows the ranking of the top 20 companies of the intellectual property strategy evaluated value (patent 1) sought as the latent variable $f_3$ using the causal model of FIG. 4. In addition, for reference, the respective top 20 companies of a total of 7 indexes of "number of claims per application," "number of claims per inventor," "patent diversification index," "average patent competitive position index" selected as the indexes that are influenced by the intellectual property strategy evaluated value (patent 1), as well as "patent desire index," "check power against other company index," and "total share of effective patents" that are effective as the indexes that are influenced by the intellectual property strategy evaluated value (patent 1).

As evident from [Table 16], although many of the top companies of the 7 indexes are also ranked as the top companies of the intellectual property strategy evaluated value (patent 1), the ranking does not coincide completely. As a result of performing evaluation based on the intellectual property strategy evaluated value (patent 1), a more comprehensive evaluation regarding the intellectual property strategy is enabled, and this can be utilized in making investment decisions.

Subsequently, the ranking of "intellectual property strategy evaluated value" - "company evaluated value" is shown in [Table 17] and explained.

[Table 17]

| "Undervalued" Companies and Their "patent" - "black" Values | | | | | | | | | |
|---|---|---|---|---|---|---|---|---|---|
| "patent" - "black" Company Ranking | | | ["R&D" + "patent" > 0] and ["black" < 0] Company List | | | | | | |
| 1 | DCI | 2.804 | NGC | 1.471 | TOU | 0.553 | DAS | 0.159 |
| 2 | MAC | 2.781 | STC | 1.358 | TTE | 0.542 | FEL | 0.127 |
| 3 | EXE | 2.620 | HOC | 1.332 | SEI | 0.526 | TYR | 0.108 |
| 4 | CMP | 2.354 | SEK | 1.232 | NSI | 0.519 | KUM | 0.069 |
| 5 | TFS | 2.350 | TIK | 1.225 | DAI | 0.460 | SHM | 0.045 |
| 6 | CAC | 2.189 | MDE | 1.171 | MIN | 0.444 | SUN | 0.034 |
| 7 | IBI | 2.116 | KYL | 1.150 | ALP | 0.432 | SSE | -0.042 |
| 8 | PEN | 2.092 | SUK | 1.076 | NSG | 0.350 | NCK | -0.045 |
| 9 | SNK | 2.066 | CAE | 1.057 | JAM | 0.328 | FJA | -0.110 |
| 10 | MAZ | 2.005 | FUM | 1.013 | KKC | 0.326 | NSO | -0.110 |
| 11 | KAN | 1.956 | SHO | 0.949 | ORI | 0.302 | OMR | -0.188 |
| 12 | CAN | 1.858 | TIN | 0.866 | TSP | 0.284 | TEI | -0.217 |
| 13 | NIY | 1.762 | MIJ | 0.862 | CIW | 0.264 | ICO | -0.265 |
| 14 | HIM | 1.691 | SKE | 0.797 | KUR | 0.258 | MUT | -0.329 |
| 15 | NOB | 1.613 | NCH | 0.785 | NCA | 0.237 | YAM | -0.369 |
| 16 | NKC | 1.599 | CRA | 0.731 | SKA | 0.231 | TEI | -0.465 |
| 17 | NKY | 1.574 | NVI | 0.653 | NKD | 0.226 | ESP | -0.600 |
| 18 | UNI | 1.530 | SJU | 0.638 | FRE | 0.203 | NOK | -0.767 |
| 19 | ENP | 1.488 | ICH | 0.630 | DKS | 0.198 | ICI | -0.822 |
| | | | SMI | 0.628 | KAP | 0.175 | | |

<4-9-5. "Intellectual Property Strategy Evaluated Value" - "Company Evaluated Value" Ranking>

[Table 17] shows the ranking of the top 19 companies of values obtained by calculating the evaluated value using the causal model of FIG. 7, and subtracting the company evaluated value (black) from the intellectual property strategy evaluated value (patent 1). In addition, among the companies other than the foregoing top 19 companies, 59 companies in which the sum of the R&D strategy evaluated value (R&D) and the intellectual property strategy evaluated value (patent 1) is greater than 0 (average value) and the company evaluated value (black) is smaller than 0 (average value) are listed in the order of values obtained by subtracting the company evaluated value (black) from the intellectual property strategy evaluated value (patent 1).

The intellectual property strategy evaluated value (patent 1) is closely related to the intellectual property related index, and the company evaluated value (black) is closely related to the market valuation related index such as PBR. As a result of seeking the value obtained by subtracting the company evaluated value (black) from the intellectual property strategy evaluated value (patent 1), it is possible to quantify the potential of so-called undervalued companies which are steadily executing their intellectual property strategy but have yet to appear in the market valuation related index. Contrarily, it could be said that companies having a low value are companies that are overvalued in the current market. Thereby, this value can be used to predict which company will succeed in the future and make investment decisions.

Similarly, the companies in which the sum of the R&D strategy evaluated value (R&D) and the intellectual property strategy evaluated value (patent 1) is greater than 0 (average value) and the company evaluated value (black) is smaller than 0 (average value) can also be considered to be so-called undervalued companies which are steadily executing their R&D strategy and intellectual property strategy but have yet to appear in the market valuation related index. Contrarily, companies in which the sum of the R&D strategy evaluated value (R&D) and the intellectual property strategy evaluated value (patent 1) is smaller than 0 (average value) and the company evaluated value (black) is greater than 0 (average value) are companies that are overvalued in the current market. Thereby, this value can be used to predict which company will succeed in the future and make investment decisions.

**Claims**

1.  A company evaluation assisting device, comprising:

    input means for receiving input of causal model information hypothesizing,
    a coefficient in which each of three evaluated values of business strategy, R&D strategy and intellectual property strategy influences a company evaluated value,
    a coefficient in which each of the three evaluated values and the company evaluated value influences each of a plurality of observable indexes, and
    an error variable in which each of factors other than the three evaluated values and the company evaluated value give fluctuation to each of the company evaluated value and the plurality of observable indexes;
    coefficient estimation means for calculating an estimated value of each of the coefficients by covariance structure analysis based on the causal model information input from the input means, and the plurality of observable indexes;
    adaptation verification means for verifying adaptation of the causal model by calculating an adaptation index based on each of the coefficients estimated with the coefficient estimation means; and
    evaluated value calculation means for calculating at least one among the three evaluated values and the company evaluated value based on each of the coefficients and the plurality of observable indexes upon passing the verification by the adaptation verification means.

2.  The company evaluation assisting device according to claim 1, further comprising index selection means for selecting a plurality of observable indexes to be included in the causal model information,
    wherein the index selection means calculate correlation coefficients regarding said plurality of observable indexes that are candidates for selection, and select a combination of indexes in which the correlation coefficients are smallest.

3.  The company evaluation assisting device according to claim 1 or claim 2,
    wherein the causal model information is information that hypothesizes an index showing at least
    "(facility investment efficiency) or (labor productivity)"
    = (value added amount) / [(tangible fixed assets) or (number of employees)]
    as the observable index that is influenced by an evaluated value of the business strategy, and
    wherein the value added amount = (operating profit) + (R&D cost) + (depreciation cost) + (personnel expense) + (board members' remuneration) + (welfare expense) + (tax and dues).

4.  The company evaluation assisting device according to any one of claims 1 to 3,
    wherein the causal model information is information that hypothesizes an index showing at least
    "R&D cost ratio"
    = (R&D cost) / [(sales volume), (value added amount), (total assets) or (gross operating profit)]
    as the observable index that is influenced by an evaluated value of the R&D strategy,
    wherein the value added amount = (operating profit) + (R&D cost) + (depreciation cost) + (personnel expense) + (board members' remuneration) + (welfare expense) + (tax and dues), and
    wherein the gross operating profit = (operating profit) + (R&D cost).

5.  The company evaluation assisting device according to any one of claims 1 to 4,
    wherein the causal model information is information that hypothesizes an index showing at least
    "(number of claims filed per inventor), (number of applications per inventor) or (number of patent registrations per inventor)"
    = [(number of claims filed), (number of applications) or (number of patent registrations)] / (number of inventors)
    as the observable index that is influenced by an evaluated value of the intellectual property strategy.

6.  The company evaluation assisting device according to any one of claims 1 to 5,
    wherein the causal model information is information that hypothesizes an index showing at least
    "PBR"
    = (aggregate market value) / (equity capital)
    as the observable index that is influenced by the company evaluated value.

7. The company evaluation assisting device according to any one of claims 1 to 6,
wherein the evaluated value calculation means calculate at least an evaluated value of the intellectual property strategy and a company evaluated value, and calculate the difference between the evaluated value of the intellectual property strategy and the company evaluated value.

8. The company evaluation assisting device according to any one of claims 1 to 6,
wherein the evaluated value calculation means calculate at least an evaluated value of the R&D strategy, an evaluated value of the intellectual property strategy and a company evaluated value, and calculate the sum of the evaluated value of the R&D strategy and the evaluated value of the intellectual property strategy.

9. A company evaluation assisting method performed by a computer, comprising:

an input step for receiving input of causal model information hypothesizing,
a coefficient in which each of three evaluated values of business strategy, R&D strategy and intellectual property strategy influences a company evaluated value,
a coefficient in which each of the three evaluated values and the company evaluated value influences each of a plurality of observable indexes, and
an error variable in which each of factors other than the three evaluated values and the company evaluated value give fluctuation to each of the company evaluated value and the plurality of observable indexes;
a coefficient estimation step for calculating an estimated value of each of the coefficients by covariance structure analysis based on the causal model information input from the input step, and the plurality of observable indexes;
an adaptation verification step for verifying adaptation of the causal model by calculating an adaptation index based on each of the coefficients estimated with the coefficient estimation step; and
an evaluated value calculation step for calculating at least one among the three evaluated values and the company evaluated value based on each of the coefficients and the plurality of observable indexes upon passing the verification by the adaptation verification step.

10. A company evaluation assisting program for causing a computer to execute:

an input step for receiving input of causal model information hypothesizing,
a coefficient in which each of three evaluated values of business strategy, R&D strategy and intellectual property strategy influences a company evaluated value,
a coefficient in which each of the three evaluated values and the company evaluated value influences each of a plurality of observable indexes, and
an error variable in which each of factors other than the three evaluated values and the company evaluated value give fluctuation to each of the company evaluated value and the plurality of observable indexes;
a coefficient estimation step for calculating an estimated value of each of the coefficients by covariance structure analysis based on the causal model information input from the input step, and the plurality of observable indexes;
an adaptation verification step for verifying adaptation of the causal model by calculating an adaptation index based on each of the coefficients estimated with the coefficient estimation step; and
an evaluated value calculation step for calculating at least one among the three evaluated values and the company evaluated value based on each of the coefficients and the plurality of observable indexes upon passing the verification by the adaptation verification step.

11. A company evaluation assisting device, comprising:

storage means for storing respectively, for a plurality of companies,
"(facility investment efficiency) or (labor productivity)"
= (value added amount) / [(tangible fixed assets) or (number of employees)],
"PBR"
= (aggregate market value) / (equity capital) and
other indexes;
standardization means for calculating a standardized value of each of the "(facility investment efficiency) or (labor productivity)" and the "PBR" of company to be evaluated among the plurality of companies based on average and variance of all companies for which the respective indexes are stored in the storage means; and
evaluated value calculation means for calculating a business strategy evaluated value by performing weighting of 0.06 or more and 0.70 or less, and 0.03 or more and 0.05 or less respectively to the "(facility investment efficiency) or (labor productivity)" and the "PBR" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues).

**12.** A company evaluation assisting device, comprising:

storage means for storing respectively, for a plurality of companies,
"(facility investment efficiency) or (labor productivity)" = (value added amount) / [(tangible fixed assets) or (number of employees)],
"PBR"
= (aggregate market value) / (equity capital) and
other indexes;
standardization means for calculating a standardized value of each of the "(facility investment efficiency) or (labor productivity)" and the "PBR" of company to be evaluated among the plurality of companies based on average and variance of all companies for which the respective indexes are stored in the storage means; and evaluated value calculation means for calculating a business strategy evaluated value by performing weighting of 0.06 or more and 0.70 or less, and 0.02 or more and 0.05 or less respectively to the "(facility investment efficiency) or (labor productivity)" and the "PBR" of the company to be evaluated standardized with the standardization means, and weighting the remainder to the other indexes,

wherein the value added amount = (operating profit) +
(R&D cost) + (depreciation cost) + (personnel expense) + (board members' remuneration) + (welfare expense) + (tax and dues).

**13.** A company evaluation assisting device, comprising:

storage means for storing respectively, for a plurality of companies,
"R&D cost ratio"
= (R&D cost) / [(sales volume), (value added amount), (total assets) or (gross operating profit)],
"R&D cost per inventor"
= (R&D cost) / (number of inventors),
"(number of claims filed per inventor), (number of applications per inventor) or (number of patent registrations per inventor)"
= [(number of claims filed), (number of applications) or (number of patent registrations)] / (number of inventors) and other indexes;
standardization means for calculating a standardized value of each of the "R&D cost ratio", the "R&D cost per inventor" and the "(number of claims filed per inventor), (number of applications per inventor) or (number of patent registrations per inventor)" of company to be evaluated among the plurality of companies based on average and variance of all companies for which the respective indexes are stored in the storage means; and evaluated value calculation means for calculating an R&D strategy evaluated value by performing weighting of 0.20 or more and 0.35 or less, 0.15 or more and 0.25 or less, and 0.06 or more and 0.15 or less respectively to the "R&D cost ratio", the "R&D cost per inventor" and the "(number of claims filed per inventor), (number of applications per inventor) or
(number of patent registrations per inventor)" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and
wherein the gross operating profit = (operating profit) + (R&D cost).

**14.** A company evaluation assisting device, comprising:

storage means for storing respectively, for a plurality of companies,
"R&D cost ratio"
= (R&D cost) / [(sales volume), (value added amount), (total assets) or (gross operating profit)],
"R&D cost per inventor"
= (R&D cost) / (number of inventors) and

other indexes;

standardization means for calculating a standardized value of each of the "R&D cost ratio" and the "R&D cost per inventor" of company to be evaluated among the plurality of companies based on average and variance of all companies for which the respective indexes are stored in the storage means; and

evaluated value calculation means for calculating an R&D strategy evaluated value by performing weighting of 0.20 or more and 0.70 or less, and 0.15 or more and 0.30 or less respectively to the "R&D cost ratio" and the "R&D cost per inventor" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and
wherein the gross operating profit = (operating profit) + (R&D cost).

15. A company evaluation assisting device, comprising:

storage means for storing indexes, for each of a plurality of companies,
"(number of claims filed per inventor), (number of applications per inventor) or (number of patent registrations per inventor)"
= [(number of claims filed), (number of applications) or (number of patent registrations)] / (number of inventors),
"(number of claims per patent application) or (number of claims per patent registration)"
= [(number of claims filed) / (number of patent applications)] or [(number of claims granted) / (number of patent registrations)],
"patent application productivity"
= (number of claims filed) / (R&D cost) and
other indexes;
standardization means for calculating a standardized value of each of the "(number of claims filed per inventor), (number of applications per inventor) or (number of patent registrations per inventor)", the "(number of claims per patent application) or (number of claims per patent registration)" and the "patent application productivity" of a company to be evaluated among the plurality of companies based on average and variance of all companies for which the respective indexes are stored in the storage means; and
evaluated value calculation means for calculating an intellectual property strategy evaluated value by performing weighting of 0.75 or more and 0.90 or less, 0.06 or more and 0.15 or less, and 0.03 or more and 0.07 or less respectively to the "(number of claims filed per inventor), (number of applications per inventor) or (number of patent registrations per inventor)", the "(number of claims per patent application) or (number of claims per patent registration)" and the "patent application productivity" of the company to be evaluated standardized with the standardization means, and weighting the remainder to the other indexes.

16. A company evaluation assisting device, comprising:

storage means for storing indexes, for each of a plurality of companies,
"(number of claims per patent application) or (number of claims per patent registration)"
= [(number of claims filed) / (number of patent applications)] or [(number of claims granted) / (number of patent registrations)],
"patent application productivity"
= (number of claims filed) / (R&D cost) and other indexes;
standardization means for calculating a standardized value of each of the "(number of claims per patent application) or (number of claims per patent registration)" and the "patent application productivity" of a company to be evaluated among the plurality of companies based on average and variance of all companies for which the respective indexes are stored in the storage means; and
evaluated value calculation means for calculating an intellectual property strategy evaluated value by performing weighting of 0.06 or more and 0.40 or less, and 0.02 or more and 0.40 or less respectively to the "(number of claims per patent application) or (number of claims per patent registration)" and the "patent application productivity" of the company to be evaluated standardized with the standardization means, and weighting the remainder to the other indexes.

17. A company evaluation assisting device, comprising:

storage means for storing indexes, for each of a plurality of companies,

"PBR"

= (aggregate market value) / (equity capital),

"(number of claims filed per inventor), (number of applications per inventor) or (number of patent registrations per inventor)"

= [(number of claims filed), (number of applications) or (number of patent registrations)] / (number of inventors), "total factor productivity"

= (current term value added amount)/(previous term value added amount) - [(1 - Labor Distribution Share) $\times$ (current term depreciation target tangible fixed assets)/(previous term depreciation target tangible fixed assets)] - [(Labor Distribution Share) $\times$ (current term number of employees)/(previous term number of employees)], and other indexes;

standardization means for calculating a standardized value of each of the "PBR", the "(number of claims filed per inventor), (number of applications per inventor) or (number of patent registrations per inventor)" and the "total factor productivity" of a company to be evaluated among the plurality of companies based on average and variance of all companies for which the respective indexes are stored in the storage means; and

evaluated value calculation means for calculating a company evaluated value by performing weighting of 0.25 or more and 0.60 or less, 0.10 or more and 0.15 or less, and 0.04 or more and 0.10 or less respectively to the "PBR", the "(number of claims filed per inventor), (number of applications per inventor) or (number of patent registrations per inventor)" and the "total factor productivity" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and

wherein the labor distribution share = [(personnel expense to be included in selling cost and administrative expenses) + (labor cost to be included in manufacturing cost)] / (value added amount).

18. A company evaluation assisting device, comprising:

storage means for storing indexes, for each of a plurality of companies,

"PBR"

= (aggregate market value) / (equity capital),

"total factor productivity"

= (current term value added amount)/(previous term value added amount) - [(1 - Labor Distribution Share) $\times$ (current term depreciation target tangible fixed assets)/(previous term depreciation target tangible fixed assets)] - [(Labor Distribution Share) $\times$ (current term number of employees)/(previous term number of employees)], and other indexes;

standardization means for calculating a standardized value of each of the "PBR" and the "total factor productivity" of a company to be evaluated among the plurality of companies based on average and variance of all companies for which the respective indexes are stored in the storage means; and

evaluated value calculation means for calculating a company evaluated value by performing weighting of 0.20 or more and 0.60 or less, and 0.04 or more and 0.15 or less respectively to the "PBR" and the "total factor productivity" of the company to be evaluated standardized with the standardization means, and weighting the remainder to the other indexes,

wherein the value added amount = (operating profit) + (R&D cost) + (depreciation cost) + (personnel expense) + (board members' remuneration) + (welfare expense) + (tax and dues), and

wherein the labor distribution share = [(personnel expense to be included in selling cost and administrative expenses) + (labor cost to be included in manufacturing cost)] / (value added amount).

FIG. 1

FIG. 2

FIG. 3

```
┌─────────────────┐
│      START      │
└─────────────────┘
         │
         ▼          ┌─ S1
     ╱CAUSAL MODEL╲      NO
    ╱ INFORMATION INPUT ╲──────┐
    ╲        ?        ╱         │
     ╲─────────────╱           │
       YES│   ┌─ S2            │
    ┌─────────────────┐        │
    │    GENERATE     │        │
    │  VARIOUS VECTORS│        │
    └─────────────────┘        │
         │     ┌─ S3           │
    ┌─────────────────┐        │
    │    ESTIMATE     │        │
    │POPULATION PARAMETERS│    │
    └─────────────────┘        │
         │     ┌─ S4           │
     ╱ POPULATION ╲     NO     │
    ╱ PARAMETERS   ╲───────────┤
    ╲ ESTIMATED ?  ╱           │
     ╲───────────╱             │
       YES│  ┌─ S5             │
     ╱ ADAPTATION ╲    NO       │
    ╱AND SIGNIFICANCE╲─────────┘
    ╲  VERIFIED ?   ╱
     ╲────────────╱
       YES│  ┌─ S6
    ┌─────────────────┐
    │CALCULATE AND OUTPUT│
    │ EVALUATED VALUE │
    └─────────────────┘
         │
    ┌─────────────────┐
    │      END        │
    └─────────────────┘
```

FIG. 4

chi=366. 906
df=70
p=. 000
RMSEA=. 094
GFI=. 907
AGFI=. 861

FIG. 5

chi=193. 459
df=37
p=. 000
RMSEA=. 093
GFI=. 932
AGFI=. 879

FIG. 6

chi=194. 415
df=37
p=. 000
RMSEA=. 094
GFI=. 931
AGFI=. 877

FIG. 7

chi=349. 153
df=73
p=. 000
RMSEA=. 098
GFI=. 881
AGFI=. 829

FIG. 8

chi=705. 003
df=83
p=. 000
RMSEA=. 082
GFI=. 925
AGFI=. 891

**INTERNATIONAL SEARCH REPORT**

| International application No. |
|---|
| PCT/JP2006/304410 |

A.  CLASSIFICATION OF SUBJECT MATTER
*G06Q10/00*(2006.01), *G06Q40/00*(2006.01)

According to International Patent Classification (IPC) or to both national classification and IPC

B.  FIELDS SEARCHED

Minimum documentation searched (classification system followed by classification symbols)
*G06Q10/00*(2006.01), *G06Q40/00*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | "3tsu no Kanten, Sogoteki Hyoka", Gekkan e·Columbus, Toho Tsushinsha, 29 May, 2003 (29.05.03), Vol.29, page 43 | 1-18 |
| Y | Toshiyuki AOKI, "Ningen Keisoku Handbook", Kabushiki Kaisha Asakura Shoten, 01 September, 2003 (01.09.03), first edition, pages 240 to 241 | 1-18 |

☐   Further documents are listed in the continuation of Box C.   ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 March, 2006 (23.03.06) | 04 April, 2006 (04.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004348170 A

**Non-patent literature cited in the description**

- Intellectual Property Information Disclosure Guidelines. 2004